# EUROPEAN PATENT SPECIFICATION

(11) **EP 4 369 642 B1**
(45) Date of publication and mention of the grant of the patent: **21.10.2026**
(21) Application number: 22851812.2
(22) Date of filing: 06.07.2022
(51) Int. Cl.: H04L 1/16, H04L 1/18, H04W 24/02

(54) **FEEDBACK INFORMATION TRANSMISSION METHOD AND RELATED APPARATUS**
VERFAHREN ZUR ÜBERTRAGUNG VON RÜCKKOPPLUNGSINFORMATIONEN UND ZUGEHÖRIGE VORRICHTUNG
PROCÉDÉ DE TRANSMISSION D'INFORMATIONS DE RÉTROACTION ET APPAREIL ASSOCIÉ

(30) Priority: 06.08.2021 CN 202110904539
(43) Date of publication of application: 15.05.2024
(73) Proprietor: Huawei Technologies Co., Ltd., Shenzhen, Guangdong 518129 (CN)
(72) Inventor: SU, Tong, Shenzhen, Guangdong 518129 (CN); LI, Shengyu, Shenzhen, Guangdong 518129 (CN); GUAN, Lei, Shenzhen, Guangdong 518129 (CN); LI, Ruijie, Shenzhen, Guangdong 518129 (CN); DING, Yang, Shenzhen, Guangdong 518129 (CN)
(74) Representative: Gill Jennings & Every LLP
(86) International application number: PCT/CN2022/104222
(87) International publication number: WO 2023/011097

(56) References cited:
- WO-A1-2021/101314
- CN-A- 109 391 440
- CN-A- 112 584 498
- US-A1- 2023 336 312
- MODERATOR (NOKIA): "Moderator summary #2 on HARQ-ACK feedback enhancements for NR Rel-17 URLLC/IIoT", vol. RAN WG1, no. e-Meeting; 20210125 - 20210205, 8 February 2021 (2021-02-08), XP051977624, Retrieved from the Internet <URL:https://ftp.3gpp.org/tsg_ran/WG1_RL1/TSGR1_104-e/Docs/R1-2101818.zip R1-2101818_Summary_[104-e-NR-IIOT_URLLC_enh-01]_HARQ _enh_v145_Moderator_eom.docx> [retrieved on 20210208]
- MODERATOR (NOKIA): "Final moderator summary on HARQ-ACK feedback enhancements for NR Rel-17 URLLC/IIoT", 3GPP DRAFT; R1-2106249, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20210519 - 20210527, 28 May 2021 (2021-05-28), Mobile Competence Centre ; 650, route des Lucioles ; F-06921 Sophia-Antipolis Cedex ; France , XP052017048

## Description

### TECHNICAL FIELD

This application relates to the field of communication technologies, and in particular, to a feedback information transmission method and a related apparatus.

### BACKGROUND

With development of communication technologies, a communication system imposes higher requirements on a transmission rate, a latency, power consumption, and the like. As one of three typical services of a new-generation communication system, ultra-reliable and low-latency communication (Ultra-Reliable and Low-Latency Communication, URLLC) is mainly applied to scenarios such as unmanned driving and telemedicine. Higher requirements on reliability and a latency are imposed for these application scenarios. For example, data transmission reliability reaches 99.999%, a transmission latency is less than 1 ms, and instruction overheads are reduced as much as possible while requirements for high reliability and a low latency are met. Therefore, how to improve the transmission delay and reliability becomes a problem of great concern in this field.

To resolve this problem, a hybrid automatic repeat request (hybrid automatic repeat request, HARQ) technology may be used. In this technology, a forward error correction (Forward Error Correction, FEC) solution is introduced in an automatic retransmission request (automatic retransmission request, ARQ) system. To be specific, FEC automatic error correction is used within an error correction capability range, and a transmit end needs to perform resending outside the error correction range, to improve system reliability.

However, when a terminal device supports carrier aggregation, HARQ feedback information of a downlink shared channel transmitted on each carrier can be sent only in a primary cell (primary cell, PCell) or a physical uplink control channel secondary cell (physical uplink control channel secondary cell, PUCCH SCell). As a result, a success rate of transmitting the HARQ feedback information is low because of an insufficient resource for transmitting the HARQ feedback information.

WO 2021/101314 discloses a feedback information transmission apparatus and method.

3GPP DRAFT; R1-2101818 discusses HARQ-ACK feedback enhancements for NR Rel-17 URLLC/IIoT

### SUMMARY

Embodiments of this application provide a feedback information transmission method and a related apparatus, to improve a success rate of transmitting HARQ feedback information and are defined in the appended claims.

### BRIEF DESCRIPTION OF DRAWINGS

FIG. 1 is a schematic diagram of a structure of a communication system 100;
FIG. 2 is a schematic diagram of a feedback information transmission method by using an example in which an uplink subcarrier spacing is the same as a downlink subcarrier spacing;
FIG. 3 is a schematic diagram of a feedback information transmission method by using an example in which an uplink subcarrier spacing is different from a downlink subcarrier spacing;
FIG. 4 is a schematic diagram of a structure of a downlink symbol, a flexible symbol, and an uplink symbol that are configured in a slot;
FIG. 5 is a schematic diagram of a method for transmitting feedback information of each PDSCH in carrier aggregation;
FIG. 6 is a schematic flowchart of a feedback information transmission method 100 according to an embodiment of this application;
FIG. 7 is a schematic diagram of a first correspondence indicated by first configuration information according to an embodiment of this application;
FIG. 8 is a schematic diagram of an example of a feedback information transmission method 100 according to an embodiment of this application;
FIG. 9 is a schematic diagram of another example of a feedback information transmission method 100 according to an embodiment of this application;
FIG. 10 is a schematic diagram of still another example of a feedback information transmission method 100 according to an embodiment of this application;
FIG. 11 is a schematic diagram of yet another example of a feedback information transmission method 100 according to an embodiment of this application;
FIG. 12 is a schematic flowchart of a feedback information transmission method 200 according to an embodiment of this application;
FIG. 13 is a schematic diagram of an example of a feedback information transmission method 200 according to an embodiment of this application;
FIG. 14 is a schematic diagram of another example of a feedback information transmission method 200 according to an embodiment of this application;
FIG. 15 is a schematic diagram of still another example of a feedback information transmission method 200 according to an embodiment of this application;
FIG. 16 is a schematic diagram of yet another example of a feedback information transmission method 200 according to an embodiment of this application;
FIG. 17 is a schematic diagram of distribution of BWPs;
FIG. 18 is a schematic diagram of slot format configurations in two cells;

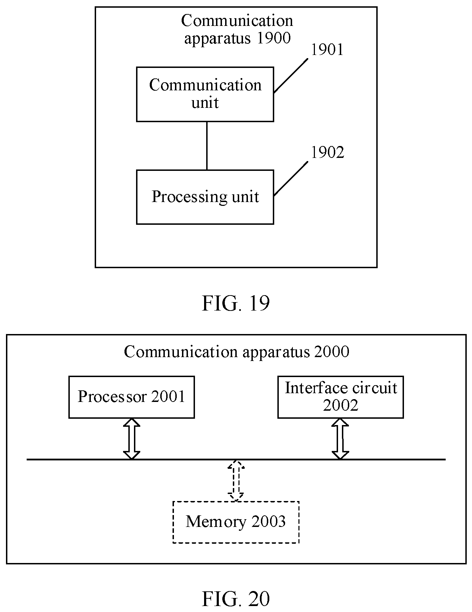

FIG. 19 is a schematic diagram of a structure of a communication apparatus 1900 according to an embodiment of this application; and
FIG. 20 is a schematic diagram of a structure of a communication apparatus 2000 according to an embodiment of this application.

### DESCRIPTION OF EMBODIMENTS

The following describes in detail specific embodiments of this application with reference to the accompanying drawings.

This application may be applied to communication systems such as standalone, namely, a new base station, a backhaul link, and a core network that are deployed in a future network, or may be applied to various communication systems such as non-standalone.

For example, the technical solutions of this application may be applied to a 5th generation (5th generation, 5G) system, which may be referred to as a new radio (new radio, NR) system, a 6th generation (6th generation, 6G) system, a 7th generation (7th generation, 7G) system, or another future communication system; or may be further applied to a device to device (device to device, D2D) system, a machine to machine (machine to machine, M2M) system, a long term evolution (long term evolution, LTE) system, a carrier aggregation (carrier aggregation, CA) system, a dual connectivity (Dual Connectivity, DC) technology system, and the like. In a CA or DC scenario, a terminal device may be connected to two base stations simultaneously, and the two base stations may provide a service. One base station or each of two base stations may be an NR base station, for example, a gNB. One base station may be a master node (master node, MN), and the other base station may provide a service for the terminal device in a manner of adding a secondary carrier or adding a secondary base station.

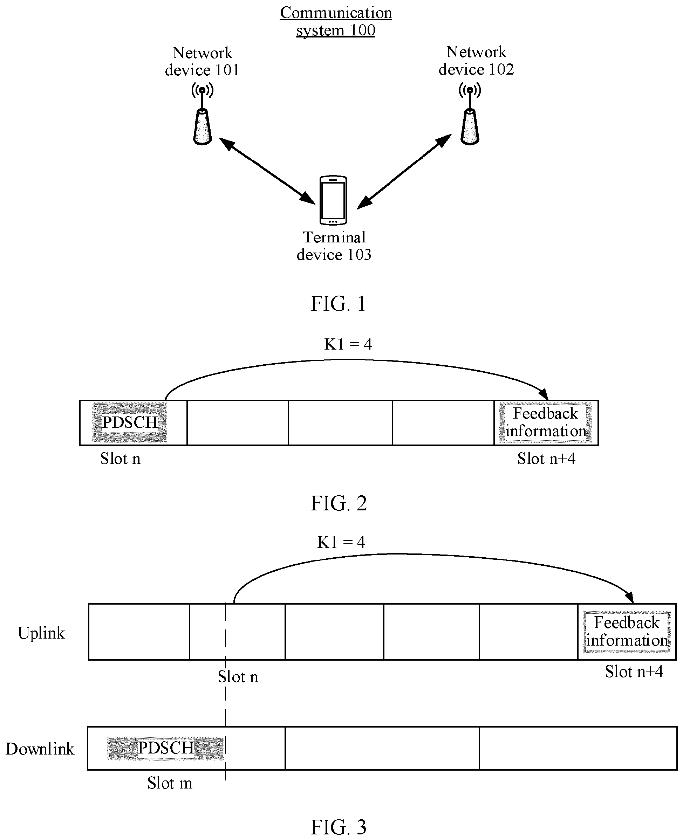

By way of example, and not limitation, a feedback information transmission method described in this application may be applied to a communication system shown in FIG. 1. FIG. 1 is a schematic diagram of a scenario of a communication system 100. The communication system 100 may include but is not limited to a plurality of network devices (for example, a network device 101 and a network device 102) and one or more terminal devices (for example, a terminal device 103). The plurality of network devices may schedule a same terminal, and provide a downlink service for one terminal, or receive an uplink service from one terminal. The network devices may communicate with each other through an Xn interface.

Optionally, in the communication system 100 shown in FIG. 1, the network device 102 may add the network device 101 as a secondary carrier or a secondary base station. In addition, the terminal device may send capability information to the network device 102, and the network device 102 may determine, based on the capability information reported by the terminal device, to add the network device 101 in a CA manner and a DC manner.

In this embodiment of this application, the network device may be a device having a wireless transceiver function or a chip that may be disposed in the device. The network device includes but is not limited to an evolved NodeB (evolved NodeB, eNB), a radio network controller (radio network controller, RNC), a NodeB (NodeB, NB), a network device controller (base station controller, BSC), a network device transceiver station (base transceiver station, BTS), a home network device (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission reception point (transmission and reception point, TRP), or a transmission point (transmission point, TP). Alternatively, the network device may be a device used in a 5G, 6G, or even 7G system, for example, a gNB or a transmission point (TRP or TP) in an NR system, or one antenna panel or a group of (including a plurality of antenna panels) antenna panels of a network device in a 5G system; or may be a network node that forms a gNB or a transmission point, for example, a baseband unit (BBU), a distributed unit (distributed unit, DU), or a road side unit (road side unit, RSU) in a vehicle to everything (vehicle to everything, V2X) or smart driving scenario.

In some deployments, the gNB or the transmission point may include a central unit (central unit, CU) and a DU. The gNB or the transmission point may further include a radio frequency unit (radio unit, RU). The CU implements some functions of the gNB or the transmission point, and the DU implements some functions of the gNB or the transmission point. For example, the CU implements functions of a radio resource control (radio resource control, RRC) layer and a packet data convergence layer protocol (packet data convergence protocol, PDCP) layer, and the DU implements functions of a radio link control (radio link control, RLC) layer, a media access control (media access control, MAC) layer, and a physical layer (physical layer, PHY). Information at the RRC layer finally becomes information at the physical layer or is transformed from information at the physical layer. Therefore, in such an architecture, it may be considered that higher layer signaling such as RRC layer signaling or PDCP layer signaling is sent by the DU or is sent by the DU and the RU. It may be understood that the network device may be a CU node, a DU node, or a device including a CU node and a DU node.

In addition, the CU may be classified as a network device in a radio access network (radio access network, RAN), namely, an access network device; or the CU may be classified as a network device in a core network (core network, CN), which is briefly referred to as a core network device. This is not limited herein.

In embodiments of this application, the terminal device may include but is not limited to user equipment (user equipment, UE), an access terminal, a subscriber unit, a subscriber station, a mobile station, a remote station, a remote terminal, a mobile device, a user terminal, a user agent, or a user apparatus. For another example, the terminal device may be a mobile phone, a tablet computer, a computer having a wireless transceiver function, a virtual reality terminal device, an augmented reality terminal device, a wireless terminal in industrial control, a wireless terminal in self-driving, a wireless terminal in remote surgery, a wireless terminal in a smart grid, a wireless terminal in transportation safety, a wireless terminal in a smart city, a wireless terminal in a smart home, or a wireless terminal or an RSU of a wireless terminal type in V2X vehicle to everything, or the like.

To clearly describe the technical solutions in embodiments of this application, the terms such as "first" and "second" are used in embodiments of this application to distinguish between same items or similar items that have basically a same function or purpose. A person skilled in the art may understand that the terms such as "first" and "second" do not limit a quantity and an execution sequence, and the terms such as "first" and "second" do not indicate a definite difference. The term "and/or" describes an association relationship for describing associated objects and indicates that three relationships may exist. For example, A and/or B may indicate the following three cases: Only A exists, both A and B exist, and only B exists. The character "/" usually indicates an "or" relationship between the associated objects.

The following first describes related concepts in this application.

### 1. Time unit

There are a plurality of time units (which may also be briefly referred to as time domain units) in a communication system. One time unit may be one or more radio frames, one or more subframes, one or more slots, one or more mini-slots, one or more symbols, or the like. A symbol may be an orthogonal frequency division multiplexing (orthogonal frequency division multiplexing, OFDM) symbol or a discrete Fourier transform spread spectrum orthogonal frequency division multiplexing (discrete Fourier transform spread spectrum orthogonal frequency division multiplexing, DFT-S-OFDM) symbol. A time length of one radio frame is 10 ms, a time length of one subframe is 1 ms, and one slot includes 14 symbols in a case of a normal cyclic prefix (Normal Cyclic Prefix), or includes 12 symbols in a case of an extended cyclic prefix (Extended Cyclic Prefix). The cyclic prefix is formed by moving a signal at a symbol tail to a head.

### 2. Data scheduling manner

The data scheduling manner may include two manners. One is a semi-persistent scheduling manner, and the other is a dynamic scheduling manner. The following separately describes the two manners.

### 2.1 Semi-persistent scheduling manner

In the semi-persistent scheduling manner, the network device configures one or more sets of semi-persistent scheduling (semi-persistent scheduling, SPS) configuration information for the terminal device, and notifies, through one activation physical downlink control channel (physical downlink control channel, PDCCH), the terminal device of one set of used SPS configuration information. A scheduling periodicity is configured in the set of SPS configuration information. In addition, the activation PDCCH can further indicate a time-frequency resource on which a physical downlink shared channel (physical downlink shared channel, PDSCH) is located. In this way, the terminal device may receive the PDSCH on a time-frequency resource indicated in each periodicity. It can be learned that, in the semi-persistent scheduling manner, the network device does not need to send one PDCCH each time before transmitting a PDSCH. Each PDSCH scheduled in the semi-persistent scheduling manner may be briefly referred to as an SPS PDSCH.

The following briefly describes the SPS configuration information and the activation PDCCH. In addition, to ensure transmission reliability, HARQ feedback information indicating a PDSCH receiving status is further described.

One set of SPS configuration information includes: (1) an index (or referred to as an identifier) corresponding to the set of SPS configuration information; (2) a periodicity (for example, a minimum periodicity is 10 ms); and (3) a physical uplink control channel (physical uplink control channel, PUCCH) resource configuration. The PUCCH resource configuration is mainly used to configure a PUCCH resource, for example, symbols in a periodicity, and the PUCCH resource may be used to carry uplink control information. In this application, the uplink control information includes HARQ feedback information, and may specifically include HARQ-ACK information or HARQ-NACK information.

Downlink control information (downlink control information, DCI) carried in the activation PDCCH may be referred to as activation DCI, and may indicate a slot in which the SPS PDSCH is located, and a start symbol S and a length L in the slot. For example, after receiving a PDSCH, the terminal device determines HARQ feedback information of the PDSCH, and sends the HARQ feedback information to the network device, so that the network device determines whether the PDSCH needs to be retransmitted.

The activation DCI may further indicate a time unit in which HARQ feedback information of each SPS PDSCH is located. For example, the activation DCI may indicate a parameter K1, and a field indicating the parameter K1 may be referred to as a K1 indication field, and is a "PDSCH-to-HARQ _feedback timing indicator" field in the DCI. The parameter K1 may correspond to one K1 value in one K1 set, and represents a quantity of slots between a slot in which one SPS PDSCH is located and a slot in which HARQ feedback information of the SPS PDSCH is located. The K1 set is a set configured by using higher layer signaling, and is a "dl-DataToUl-ACK" field in the PUCCH resource configuration.

Time domain lengths of time units whose subcarrier spacings have different values are different. For example, a time domain length of a slot whose subcarrier spacing is 15 kHz is twice a time domain length of a slot whose subcarrier spacing is 30 kHz. Therefore, when a feedback time unit is determined, an uplink/downlink subcarrier spacing further needs to be considered.

For example, in FIG. 2, an example in which an uplink subcarrier spacing is the same as a downlink subcarrier spacing is used, that is, time domain lengths of uplink and downlink slots are the same. As shown in FIG. 2, if a slot (slot) in which an SPS PDSCH is located is a slot n, and a K1 value corresponding to a parameter K1 that is in a K1 set and that is indicated by activation DCI is 4, the terminal device feeds back HARQ feedback information of the SPS PDSCH in a slot n+4.

Optionally, if the uplink subcarrier spacing is different from the downlink subcarrier spacing, an uplink slot corresponding to an end moment of the SPS PDSCH needs to be determined, and a slot in which the HARQ feedback information of the SPS PDSCH is located is then determined based on the K1 value. For example, in FIG. 3, an example in which an uplink subcarrier spacing is 30 kHz and a downlink subcarrier spacing is 15 kHz is used. Consequently, a length of a downlink slot is twice a length of an uplink slot. Therefore, assuming that an uplink slot corresponding to an end moment of an SPS PDSCH sent in a downlink slot m is a slot n, and a K1 value corresponding to a parameter K1 that is in a K1 set and that is indicated by activation DCI is 4, the terminal device feeds back HARQ feedback information of the SPS PDSCH in an uplink slot n+4.

In addition to determining a feedback time unit, the terminal device further needs to know a PUCCH resource for transmitting the HARQ feedback information in the feedback time unit. For ease of description, the resource in the slot is referred to as a feedback resource. The terminal device determines, based on a total quantity of bits of HARQ feedback information that needs to be fed back in the feedback time unit and from a plurality of PUCCH resources configured by the network device for the terminal device, to select, as the feedback resource, a PUCCH resource that matches the total quantity of bits of HARQ feedback information.

For example, the network device configures four PUCCH resources for the terminal device. If the total quantity of bits of HARQ feedback information is less than or equal to 2, a first PUCCH resource may be used as the feedback resource. If the total quantity of bits of HARQ feedback information is between 3 and N1, a second PUCCH resource is used as the feedback resource. If the total quantity of bits of HARQ feedback information is between N1 and N2, a third PUCCH resource is used as the feedback resource. If the total quantity of bits of HARQ feedback information is between N2 and N3, a fourth PUCCH resource is used as the feedback resource. 3 < N1 < N2 < N3. Optionally, N1, N2, and N3 are indicated by configuration information sent by the network device, or are 1706 by default.

In addition, a semi-persistent scheduling SPS PDSCH may be a first SPS PDSCH scheduled by using the activation DCI, or may be an SPS PDSCH periodically transmitted in a periodicity P configured in SPS configuration information. Regardless of the first SPS PDSCH or a subsequent SPS PDSCH that is periodically transmitted and does not need to be scheduled by using the DCI, a slot in which HARQ feedback information corresponding to the SPS PDSCH is located is determined by using the parameter K1 indicated by the activation DCI. Details are not described herein again. In the semi-persistent scheduling manner, the first SPS PDSCH may be referred to as a PDSCH with scheduling information, and the subsequent PDSCH may be referred to as a PDSCH without scheduling information.

### 2.2. Dynamic scheduling manner

In the dynamic scheduling manner, one PDCCH schedules one PDSCH for transmission. Therefore, before each PDSCH is transmitted, the network device needs to send one PDCCH. That is, in the dynamic scheduling manner, each PDSCH is a PDSCH with scheduling information.

In this manner, DCI, for example, the foregoing activation DCI, may indicate a slot in which a scheduled PDSCH is located (for example, the foregoing parameter K0), and a start symbol S and a length L in the slot, and may further indicate a slot in which HARQ feedback information of the PDSCH is located (for example, the foregoing parameter K1). Details are not described herein again. In this manner, the HARQ feedback information and a feedback time unit are the same as those in the semi-persistent scheduling manner described in 1.1. Details are not described herein again. However, a manner of determining a feedback resource in the dynamic scheduling manner is different from that in the semi-persistent scheduling manner described in 1.1.

In the dynamic scheduling manner, after determining a total quantity of bits of HARQ feedback information that needs to be transmitted in the feedback time unit, the terminal device selects a PUCCH resource set based on the total quantity of bits; and selects a PUCCH resource from the PUCCH resource set as the feedback resource based on a PUCCH resource indicator (PUCCH Resource Indicator, PRI) in the DCI.

For example, the network device configures K (1 ≤ K ≤ 4) PUCCH resource sets (PUCCH Resource Sets) for the terminal device. Each PUCCH resource set may include a plurality of PUCCH resources and a resource list. The resource list is used to store IDs of the PUCCH resources. For example, when the total quantity of bits of HARQ feedback information is less than or equal to 2 bits, a first PUCCH resource set is selected. When 2 bits < Total quantity of bits of HARQ feedback information ≤ N₁ bits, a second PUCCH resource set is selected. When N₁ bits < Total quantity of bits of HARQ-ACK feedback information ≤ N₂ bits, a third PUCCH resource set is selected. When N₂ bits < Total quantity of bits of HARQ-ACK feedback information ≤ N₃ bits, a fourth PUCCH resource set is selected. Further, a PUCCH resource is selected from the selected PUCCH resource set as the feedback resource. Optionally, N₁, N₂, and N₃ are indicated by configuration information sent by the network device, or are 1706 by default.

### 3. Slot configuration

Slot configuration information indicates which symbols are downlink symbols, which symbols are flexible symbols, and which symbols are uplink symbols in one slot. Alternatively, it is understood as that the slot configuration information indicates locations of uplink symbols, downlink symbols, and flexible symbols in one slot and a ratio. The uplink symbol is used to transmit uplink information, the downlink symbol is used to transmit downlink information, and the flexible symbol may be used to transmit the uplink information, or may be used to transmit the downlink information.

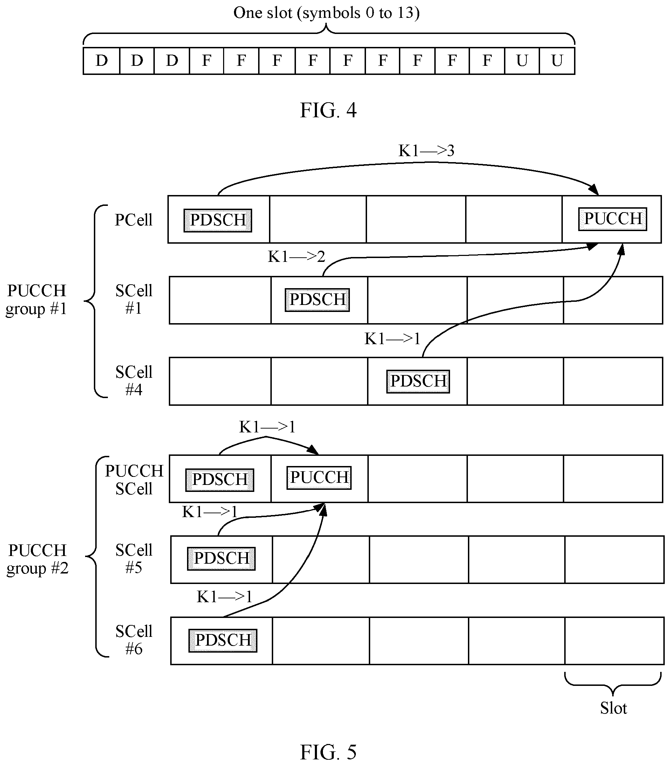

For example, as shown in FIG. 4, in a slot that may be configured by the network device, a symbol 0 to a symbol 2 are downlink symbols (marked as D), a symbol 3 to a symbol 11 are flexible symbols (marked as F), and a symbol 12 and a symbol 13 are uplink symbols (marked as U).

Optionally, if one of the following conflict cases occurs on a PUCCH resource on which HARQ feedback information is located, sending of the HARQ feedback information on the PUCCH resource is canceled.

Case (1): If the PUCCH resource overlaps a semi-static downlink symbol, in other words, the PUCCH resource corresponds to a semi-static downlink symbol, the sending of the HARQ feedback information on the PUCCH resource is canceled. For example, the PUCCH resource is the symbol 2 to the symbol 4, but the symbol 2 to the symbol 4 are configured as the downlink symbols in the semi-static manner in the foregoing Manner (1) or Manner (2).

Case (2): The PUCCH resource overlaps a dynamic downlink symbol or a downlink symbol in which a dynamically scheduled PDSCH is located.

Case (3): The PUCCH resource overlaps a semi-static flexible symbol, and an SFI is further configured for the terminal device. The flexible symbol is not configured as a dynamic uplink symbol by using the SFI.

In this case, the foregoing conflict case may also be referred to as that the PUCCH resource overlaps a downlink resource or a flexible resource in time domain. The downlink resource may include the downlink symbol, and the flexible resource may include the flexible symbol. Therefore, the conflict case may also be referred to as that the PUCCH resource overlaps the downlink symbol or the flexible symbol in time domain.

### 4. Carrier aggregation (CA)

Downlink transmission may be performed by using a plurality of carriers through CA, to implement a large transmission bandwidth and improve a downlink transmission rate. In the CA, the terminal device may support a plurality of cells, and different cells may form a cell group (Cell Group), for example, a master cell group (master cell group, MCG) and a secondary cell group (secondary cell group, SCG). The MCG includes a plurality of cells. A cell used to initiate initial access may be referred to as a primary cell (primary cell, PCell), and other cells are referred to as secondary cells (secondary cells, SCells). The PCell and the SCells in the MCG are combined through carrier aggregation. The SCG further includes a plurality of cells. The SCG also includes a cell similar to the PCell in the MCG, which is referred to as a primary secondary cell (primary secondary cell, PSCell). Similarly, the PSCell and SCells in the SCG may also be combined through carrier aggregation.

As described above, regardless of the semi-persistent scheduling manner or the dynamic scheduling manner, to ensure transmission reliability, the HARQ feedback information is sent according to the foregoing HARQ mechanism.

To determine a feedback time unit in which the HARQ feedback information is located and a feedback resource on which the HARQ feedback information is located, in addition to knowing a parameter K1 and a total quantity of bits of HARQ feedback information, the terminal device further needs to know a K1 set, an optional PUCCH resource set, and a PUCCH resource. The K1 set, the optional PUCCH resource set, and the PUCCH resource are notified to the terminal device by using PUCCH configuration information of a cell.

In an MCG, if no PUCCH SCell is configured, PUCCH configuration information is available only in a PCell. If an SCell is configured as a PUCCH SCell, PUCCH configuration information is also available in the PUCCH SCell. The PUCCH configuration information in the PCell may be different from that in the PUCCH SCell. Each piece of PUCCH configuration information includes the foregoing K1 set and the foregoing plurality of PUCCH resource sets. An SCG is similar to the MCG. PUCCH configuration information is available in a PSCell, or a PSCell and an SCell configured as a PUCCH SCell.

An MCG is used as an example. As shown in FIG. 5, there is PUCCH configuration information in a PCell and a PUCCH SCell. In the MCG, the PCell and some SCells perform HARQ feedback in the PCell, and the PCell and the some SCells (for example, an SCell #1 and an SCell #4) form a PUCCH group (a PUCCH group #1 shown in FIG. 5). Other SCells perform HARQ feedback in the PUCCH SCell, and the other SCells form another PUCCH group (for example, a PUCCH group #2 shown in FIG. 5). In FIG. 5, an example in which subcarrier spacings of the PCell, the SCell #1, the SCell #4, the SCell #5 and the SCell #6 are the same is used. If the subcarrier spacings are different, the terminal device needs to determine a feedback time unit (namely, a feedback slot) based on a slot corresponding to an end symbol of a PDSCH in the PCell or the PUCCH SCell and a K1 value indicated by a K1 indication field in DCI corresponding to the PDSCH in a configured K1 set.

In this embodiment of this application, the cell may be a logical concept, and may include one or more carriers, and the carrier may be a physical concept. Therefore, in this embodiment of this application, the cell may be replaced with the carrier, and multi-carrier aggregation may also be understood as coordination between a plurality of cells.

When the terminal device supports the carrier aggregation, HARQ feedback information of the plurality of cells can be transmitted only in the PCell or the PUCCH SCell. Consequently, resources for transmitting the HARQ feedback information in the PCell or the PUCCH SCell are insufficient. In addition, due to the slot configuration, the conflict cases described in the foregoing Case (1) to Case (3) occur, and the HARQ feedback information cannot be sent or is directly discarded. As a result, a success rate of transmitting the HARQ feedback information is low.

This application provides a feedback information transmission method 100. In the feedback information transmission method 100, a terminal device may send HARQ feedback information in a target time unit in a target cell through switching of a time domain and/or a frequency domain based on a one-to-one correspondence between reference time units indicated by first configuration information and cells configured to send the HARQ feedback information. Therefore, flexibility of a time-frequency resource for sending the HARQ feedback information is improved, and a success rate of transmitting the HARQ feedback information is improved.

This application further provides a feedback information transmission method 200. In the feedback information transmission method 200, when a first PUCCH resource overlaps a downlink symbol or a flexible symbol in time domain, HARQ feedback information is switched to another time unit for sending. This resolves low data transmission reliability because the HARQ feedback information cannot be sent and is discarded when the PUCCH resource overlaps the downlink symbol or the flexible symbol. Therefore, in the feedback information transmission method, a success rate of transmitting the HARQ feedback information can be improved. In other words, in the feedback information transmission method 200, when a resource conflict occurs on the first PUCCH resource, for example, the foregoing Case (1) to Case (3) occur, the HARQ feedback information may be switched to a following time unit for sending, or the HARQ feedback information may be switched to another cell for sending or another time unit of another cell for sending. This resolves a problem that the HARQ feedback information cannot be sent or is discarded because the PUCCH resource overlaps the downlink symbol or the flexible symbol, and improves the success rate of transmitting the HARQ feedback information.

The following describes in detail embodiments of this application with reference to the accompanying drawings.

### Embodiment 1: Feedback information transmission method 100

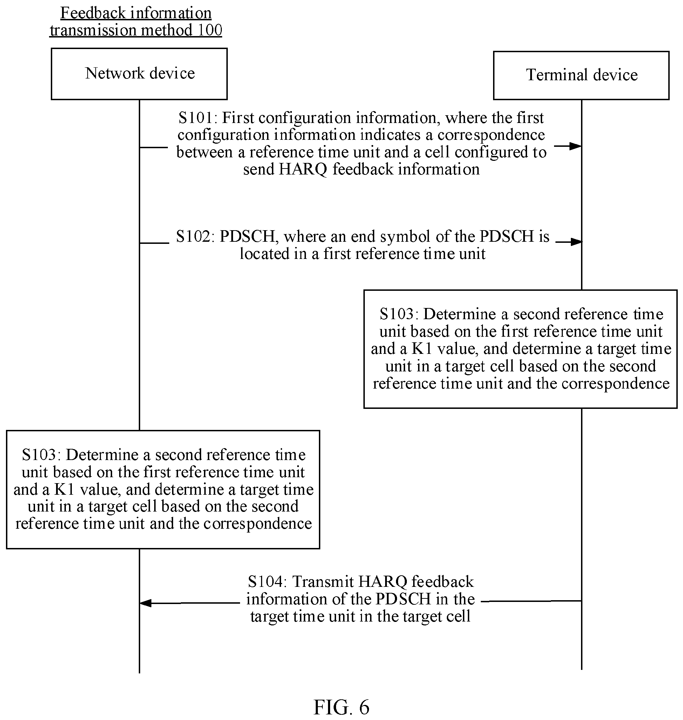

FIG. 6 is a schematic flowchart of a feedback information transmission method according to an embodiment of this application. As shown in FIG. 6, the feedback information transmission method 100 includes but is not limited to the following steps.

S101: A network device sends first configuration information, where the first configuration information indicates a one-to-one correspondence between M reference time units and a plurality of cells configured to send hybrid automatic repeat request HARQ feedback information in the M reference time units. Correspondingly, a terminal device receives the first configuration information.

The one-to-one correspondence means that one of the M reference time units corresponds to one of the cells that are indicated by a base station and that are used to send the HARQ feedback information. For example, in the correspondence, if one reference time unit is a time unit #1, and the time unit #1 corresponds to an SCell #3 that is indicated by the base station and that is used to send the HARQ feedback information, in duration from a time domain start symbol of the time unit #1 to a time domain end symbol of the time unit #1, a cell used to send the feedback information is the SCell #3.

For ease of description, the "one-to-one correspondence" is briefly referred to as a "correspondence" in this specification. In addition, the plurality of cells configured to send the hybrid automatic repeat request HARQ feedback information in the M reference time units are briefly referred to as a plurality of cells.

Different reference time units in the M reference time units may correspond to a same cell, or may correspond to different cells. This is not limited in this application.

For example, Table 1 may be an example of the one-to-one correspondence. Indexes 0 to 4 respectively indicate five reference time units, and the plurality of cells in the one-to-one correspondence are respectively an SCell #1, an SCell #2, the SCell #3, and an SCell #4. Each of the five reference time units respectively corresponds to one of the four cells in the one-to-one correspondence. The index 0 and the index 3 seperately indicate a same cell, and other indexes separately indicate different cells.

**Table 1**

| Reference time unit | Carrier |
|---|---|
| First time unit in a time domain sequence | SCell #3 |
| Second time unit in the time domain sequence | SCell #2 |
| Third time unit in the time domain sequence | SCell #1 |
| Fourth time unit in the time domain sequence | SCell #3 |
| Fifth time unit in the time domain sequence | SCell #4 |

Optionally, the first configuration information in the foregoing embodiment may be indicated by the base station to the terminal device by using a cell group configuration information element (cell group configuration information element, CellGroupConfig Information Element); or may be implicitly or explicitly indicated to the terminal device. The first configuration information may be explicitly indicated by using higher layer signaling, for example, RRC signaling.

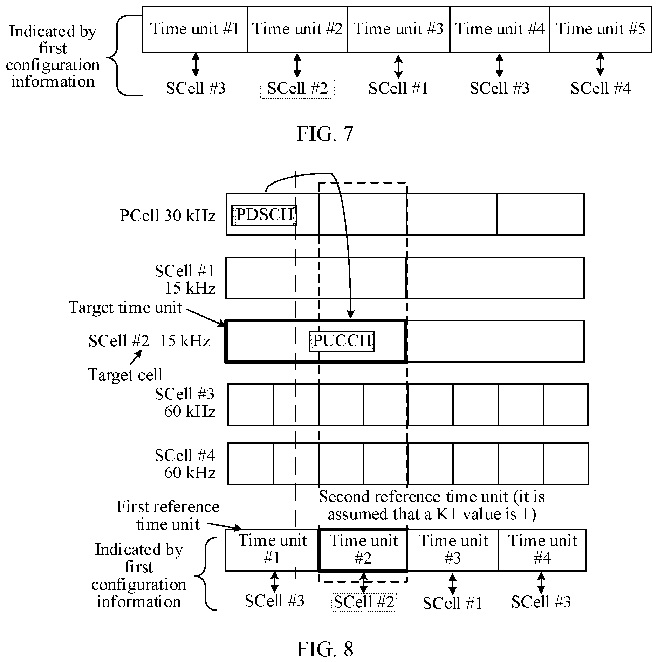

In an optional manner, the first configuration information explicitly indicates the one-to-one correspondence between the M reference time units and the plurality of cells. In other words, the first configuration information includes information about the M reference time units, information about the plurality of cells, and information about the one-to-one correspondence. FIG. 7 shows an example of the first configuration information. In FIG. 7, in the duration from the time domain start symbol of the time unit #1 to the time domain end symbol of the time unit #1, a corresponding cell used to send the feedback information is the SCell #3, and so on. For example, in this manner, the first configuration information may include the information about the plurality of reference time units in a first column in Table 1, the information about the plurality of cells in a second column, and the correspondence between the information about the plurality of reference time units and the information about the plurality of cells.

In another optional manner, the first configuration information may not include the information about the M reference time units, and includes the information about the plurality of cells and the information about the one-to-one correspondence. In this case, the correspondence that is between the plurality of cells and the reference time units and that is indicated in the first configuration information may be predefined or preconfigured. For example, there is a one-to-one correspondence between the plurality of cells and the M reference time units that are arranged in a sequence of time domain locations, to obtain the one-to-one correspondence that is between the reference time units and the cells and that is indicated in the first configuration information. For example, Table 1 is an example of the first configuration information. In this case, the first configuration information may include the information about the plurality of cells in a right column in Table 1. Time units corresponding to the plurality of cells are predefined as the first time unit to the fifth time unit in a time domain sequence, so that the first configuration information implicitly indicates a one-to-one correspondence between the M time units and the plurality of cells.

Optionally, the first configuration information may alternatively be in another form, so that the terminal device obtains a correspondence indicated by the first configuration information. This is not limited in this application.

Time domain lengths of the M reference time units are the same, and the time domain lengths of the reference time units are determined based on a first subcarrier spacing. An optional implementation of the first subcarrier spacing may include but is not limited to the following implementations.

S102: The network device sends a PDSCH. Correspondingly, the terminal device receives the PDSCH.

An end symbol of the PDSCH is located in the first reference time unit in the M reference time units.

Optionally, the first reference time unit is a reference time unit in which the end symbol of the PDSCH is located. When a subcarrier spacing of a cell in which the PDSCH is located is equal to the first subcarrier spacing, because the reference time unit and a time unit in the cell in which the PDSCH is located have a same time domain length, the first reference time unit may be represented as a time unit in which the end symbol of the PDSCH is located. When a subcarrier spacing of a cell in which the PDSCH is located is not equal to the first subcarrier spacing, because the reference time unit and a time unit in the cell in which the PDSCH is located have different time domain lengths, the first reference time unit is represented as a reference time unit in which the end symbol of the PDSCH is located.

Optionally, the network device may send DCI before S102. The DCI may dynamically schedule a PDSCH, or is used to activate an SPS PDSCH of the foregoing SPS configuration information. Correspondingly, before step S102, the terminal device may receive the DCI, and receive a corresponding PDSCH based on the DCI.

S103: The network device determines a second reference time unit in the M reference time units based on the first reference time unit, and determines a target time unit in a target cell based on the second reference time unit and the correspondence. Correspondingly, the terminal device also determines the second reference time unit in the M reference time units based on the first reference time unit, and determines the target time unit in the target cell based on the second reference time unit and the correspondence.

The second reference time unit is after the first reference time unit, and the second reference time unit and the first reference time unit are separated by K1 reference time units, where K1 is an integer greater than or equal to 0. Optionally, if the first subcarrier spacing is the same as the subcarrier spacing of the cell in which the PDSCH is located, that is, the reference time unit and the time unit in which the PDSCH is located have the same time domain length, the second reference time unit may be represented as a time unit that is separated from the time unit in which the PDSCH is located by the K1 time units.

K1 is indicated by the DCI for scheduling the PDSCH, and K1 is a value in a K1 set, and as described above, is determined with reference to the K1 set. In this application, an optional implementation of the K1 set may include but is not limited to the following implementations. The K1 value may be an integer greater than or equal to 0. For example, if the K1 value is equal to 0, the second reference time unit and the first reference time unit are a same time unit. If the K1 value is equal to 1, the second reference time unit is an adjacent reference time unit behind the first reference time unit. If the K1 value is equal to 2, the second reference time unit is a reference time unit identified by an index obtained by adding 2 to an index of the first reference time unit, where an index of the second reference time unit is equal to the obtained index.

The target cell is a cell corresponding to the second reference time unit in the correspondence indicated by the first configuration information, and the target time unit is a time unit that is in the target cell and that overlaps the second reference time unit in time domain. Optionally, if the first subcarrier spacing is the same as the subcarrier spacing of the cell in which the PDSCH is located, the target time unit is a time unit that is in the target cell and that is separated from the time unit in which the PDSCH is located by K1 time units.

In an optional implementation, if there are a plurality of time units in the target cell that overlap the second reference time unit in time domain, the target time unit is a time unit at a foremost time domain location in time units that are in the target cell and that overlap the second reference time unit in time domain. In this implementation, a feedback delay is reduced.

In another optional implementation, if there are a plurality of time units in the target cell that overlap the second reference time unit in time domain, the target time unit is a time unit at a rearmost time domain location in time units that are in the target cell and that overlap the second reference time unit in time domain. In this implementation, the target time unit can be located as late as possible in time domain. This avoids that the terminal device discards the feedback information due to an insufficient data processing capability, and improves a success rate of sending the feedback information.

S104: The terminal device sends the HARQ feedback information of the PDSCH in the target time unit in the target cell. Correspondingly, the network device receives the HARQ feedback information for the PDSCH in the target time unit in the target cell.

It can be learned that, in the feedback information transmission method, based on the correspondence that is between the reference time units and the cells and that is indicated by the first configuration information, the HARQ feedback information may be switched to one target cell for sending, which is not limited to a primary cell PCell or a PUCCH SCell for sending, so that a success rate of transmitting the HARQ feedback information can be improved. In other words, in the feedback information transmission method, a rule for switching HARQ feedback information in time domain and/or frequency domain may be specified, so that the terminal device and the network device can align the target time unit and the target cell in which the HARQ feedback information is transmitted, thereby improving a success rate of transmitting the HARQ feedback information, and improving communication reliability.

In the feedback information transmission method 100 shown in FIG. 6, because the plurality of cells indicated by the first configuration information respectively correspond to different subcarrier spacings, this application provides the following several optional solutions for determining the first subcarrier spacing.

Implementation 1.1: The first subcarrier spacing is configured by the network device, and is used to determine the time domain length of the reference time unit.

In this way, the network device can adjust the time domain length of the reference time unit in time based on system load and a channel status by using the first subcarrier spacing, to flexibly configure a relationship between a feedback delay and a feedback success rate.

For example, it is assumed that the first subcarrier spacing configured by the network device is 30 kHz, and the plurality of cells configured to send the HARQ feedback information are a PCell, an SCell #1, an SCell #2, an SCell #3 and an SCell #4 respectively. Subcarrier spacings respectively corresponding to the plurality of cells are shown in FIG. 8. Assuming that a PDSCH is located in the PCell, a reference time unit in which an end symbol of the PDSCH is located is a time unit #1 shown in FIG. 8. Assuming that a K1 indication field in DCI for scheduling the PDSCH is 00, and a used K1 set is {1, 2, 3, 4}, a K1 value is 1. Therefore, a second reference time unit is a time unit separated from the first reference time unit by one reference time unit, namely, a time unit #2 shown in FIG. 8. Based on a correspondence shown in FIG. 8 and indicated by first configuration information, a target cell is the SCell #2 corresponding to the second reference time unit, namely, the time unit #2. A target time unit is a time unit that is in the SCell #2 and that overlaps the time unit #2 in time domain, for example, a target time unit shown in FIG. 8. Therefore, the terminal device may send the HARQ feedback information in the target time unit in the SCell #2, for indicating a receiving status of the PDSCH.

The terminal device may determine a PUCCH resource in the target time unit in a semi-persistent scheduling manner or a dynamic scheduling manner, to send the HARQ feedback information. For example, the PUCCH resource in which the HARQ feedback information is located is a PUCCH in the target time unit shown in FIG. 8.

It can be learned that, in the feedback information transmission method, based on the first configuration information, the HARQ feedback information of the PDSCH may be switched to the time unit of the SCell #2 for sending. This resolves a low success rate of transmitting the HARQ feedback information because the HARQ feedback information can be sent only in the PCell or the PUCCH SCell.

Optionally, if a subcarrier spacing corresponding to a cell that sends the PDSCH is equal to the first subcarrier spacing, a reference time unit in the correspondence indicated by the first configuration information is a time unit in the cell, and the first reference time unit is a time unit in which the end symbol of the PDSCH is located, and is briefly referred to as a first time unit. The second reference time unit is a time unit that is separated from the time unit in which the end symbol of the PDSCH is located by K1 time units, and is briefly referred to as a second time unit. The target cell is a cell corresponding to the second time unit in the correspondence. The target time unit is a time unit that is in the target cell and that overlaps the second time unit in time domain.

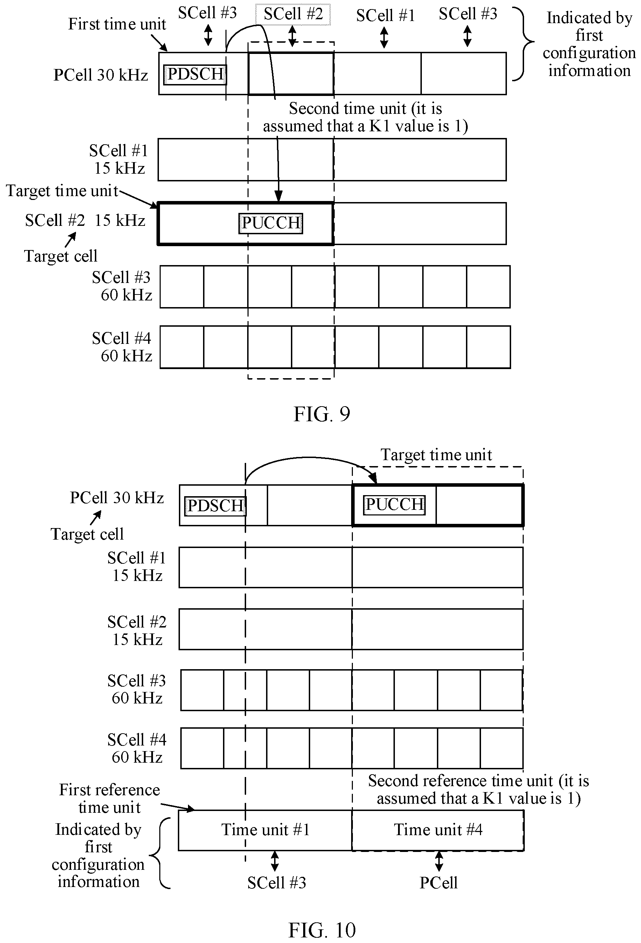

Therefore, if the subcarrier spacing corresponding to the cell that sends the PDSCH is equal to the first subcarrier spacing, a schematic diagram of a feedback information transmission method is shown in FIG. 9. The terminal device may determine a second time unit that is separated from a time unit in which an end symbol of a PDSCH is located by K1 time units, determine, based on first configuration information, a target cell corresponding to the second time unit, namely, an SCell #2, and further determine a time unit that is in the SCell #2 and that overlaps the second time unit in time domain, namely, a time unit shown by using a thick block in the SCell #2 shown in FIG. 9. Therefore, a PUCCH resource is determined in the time unit according to the foregoing method, to send HARQ feedback information of the PDSCH.

It can be learned that, based on the schematic diagrams shown in FIG. 8 and FIG. 9, specific operation steps of determining, by the terminal device, the target cell and the target time unit based on the first configuration information and the first reference time unit are not unique. For example, the first reference time unit and the second reference time unit shown in FIG. 8 are described by using the time domain length of the time unit corresponding to the first subcarrier spacing as a granularity. Because the first subcarrier spacing is equal to the subcarrier spacing of the cell in which the PDSCH is located, the first time unit and the second time unit shown in FIG. 9 are described by using the time domain length of the time unit in the cell in which the PDSCH is located as a granularity. Consequently, a specific operation process in which the terminal device or the network device determines the target cell and the target time unit is not limited in this application.

Implementation 1.2: The first subcarrier spacing is a smallest subcarrier spacing in subcarrier spacings corresponding to the plurality of cells.

Compared with a time domain length that is of a subcarrier spacing and that is used during feedback limited to a PCell or a PUCCH SCell, a time domain length that is of a reference time unit and that is determined in this implementation is a largest time domain length corresponding to the plurality of cells, so that a moment at which channel quality is good is selected from long time domain duration to feed back HARQ feedback information of a PDSCH, thereby improving a success rate of transmitting the feedback information.

For example, as shown in FIG. 10, a plurality of cells configured to send HARQ feedback information is the PCell, the SCell #1, the SCell #2, the SCell #3 and the SCell #4 shown in FIG. 8 or FIG. 9. AK1 indication field in DCI is 00, and a used K1 set is {1, 2, 3, 4}. A smallest subcarrier spacing in subcarrier spacings respectively corresponding to the PCell, the SCell #1, the SCell #2, the SCell #3, and the SCell #4 is a subcarrier spacing 15 kHz corresponding to the SCell #1 or the SCell #2. Therefore, a first subcarrier spacing is 15 kHz. As shown in FIG. 10, time domain lengths of reference time units are the same as a time domain length of one slot in the SCell #1 or the SCell #2. In a correspondence indicated by first configuration information, the reference time units are a time unit #1 and a time unit #2, and corresponding cells are the SCell #3 and the PCell respectively. As shown in FIG. 10, a PDSCH is a PDSCH in the PCell, a K1 value is 1, a first reference time unit determined by the terminal device is the time unit #1, a second reference time unit is the time unit #2, a target cell is the PCell, and a time unit that is in the PCell and that overlaps the time unit #2 in time domain is two time units in a thick block in the PCell shown in FIG. 10.

In the foregoing optional implementation, when there are a plurality of time units in the target cell that overlap the second reference time unit in time domain, the terminal device and the network device may agree on using a time unit at a foremost time domain location as a target time unit, or the terminal device and the network device may agree on using a time unit at a rearmost time domain location as a target time unit. In the schematic diagram shown in FIG. 10, assuming that the time unit at the foremost time domain location is agreed to be used as the target time unit, the target time unit is the time unit at the foremost time domain location in a thick block in the PCell shown in FIG. 10, namely, a time unit in which a PUCCH resource is located.

Implementation 1.3: The first subcarrier spacing is a largest subcarrier spacing in subcarrier spacings corresponding to the plurality of cells.

Compared with a time domain length that is of a subcarrier spacing and that is used for feedback limited to a PCell or a PUCCH SCell, the time domain length that is of the reference time unit and that is determined in this implementation has a smallest value in time domain lengths of time units corresponding to the plurality of cells, so that a feedback delay is reduced.

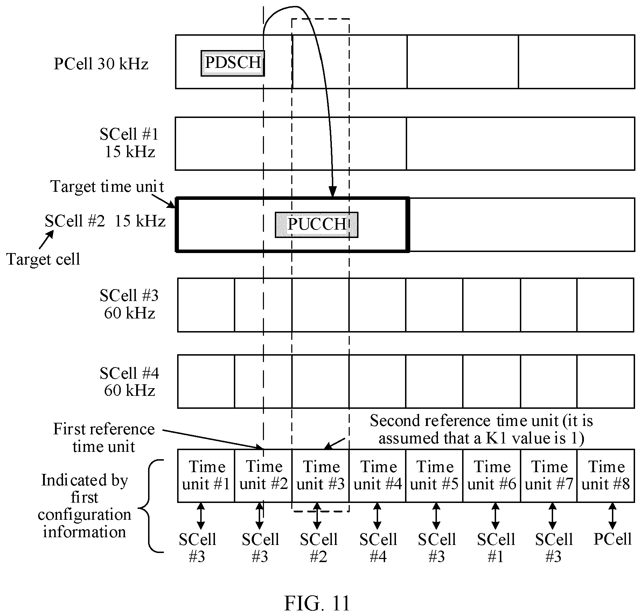

For example, as shown in FIG. 11, a plurality of cells configured to send HARQ feedback information is the PCell, the SCell #1, the SCell #2, the SCell #3 and the SCell #4 shown in FIG. 8 or FIG. 9. It is assumed that a K1 indication field in DCI is 00, and a used K1 set is {1, 2, 3, 4}. A largest subcarrier spacing in subcarrier spacings respectively corresponding to the PCell, the SCell #1, the SCell #2, the SCell #3 and the SCell #4 is a subcarrier spacing 60 kHz in the SCell #3 or the SCell #4. Therefore, a first subcarrier spacing is 60 kHz. As shown in FIG. 11, time domain lengths of reference time units are the same as a time domain length of one slot in the SCell #3 or the SCell #4. In a correspondence indicated by first configuration information, the reference time units are a time unit #1 to a time unit #8, and respective corresponding cells are the SCell #3, the SCell #3, the SCell #2, the SCell #4, the SCell #3, the SCell #1, the SCell #3, and the PCell respectively. As shown in FIG. 11, assuming that a PDSCH is a PDSCH in the PCell, and a K1 value is 1, a first reference time unit determined by the terminal device is the time unit #2, a second reference time unit is the time unit #3, a target cell is the SCell #2, and a target time unit is a time unit in a thick block in the SCell #2 shown in FIG. 11.

In still another optional implementation, the first subcarrier spacing is predefined. In this way, resource overheads required for configuration and complexity are reduced.

It should be noted that the correspondences indicated by the first configuration information shown in FIG. 7 and FIG. 8 to FIG. 11 are described for ease of understanding. The reference time unit may be the time unit in the cell corresponding to the first subcarrier spacing, and the first configuration information may be but is not limited to information in the manners shown in Table 1 and FIG. 7. The terminal device obtains the correspondence based on the first subcarrier spacing and the first configuration information.

K1 is indicated by the downlink control information DCI for scheduling the PDSCH, and K1 is a value in a K1 set. Because the cell in which the HARQ feedback information is transmitted is no longer limited to the PCell or the PUCCH SCell, how the terminal device knows the K1 set used in the feedback information transmission method is also a problem that needs to be resolved. The following describes possible implementations.

Implementation 2.1: The K1 set is a K1 set configured for a cell in which the PDSCH is located. In this way, considering a feedback delay required for the PDSCH of the cell and/or an uplink transmission capability of the terminal device, a feedback time unit is determined based on the K1 set.

Implementation 2.2: The K1 set is a K1 set configured for a primary cell accessed by the terminal device. In this way, considering a feedback delay required for the PDSCH of the primary cell and/or an uplink transmission capability of the terminal device, a feedback time unit is determined based on the K1 set.

Implementation 2.3: The K1 set is a K1 set configured for a cell with the smallest subcarrier spacing in the plurality of cells. In this way, with reference to a feedback delay required for the PDSCH of the cell with the smallest subcarrier spacing, a feedback time unit may be determined based on the K1 set.

In another optional implementation, when there are a plurality of cells with a smallest subcarrier spacing in the plurality of cells, the K1 set is a K1 set configured for a cell with a smallest or largest index in the cells with the smallest subcarrier spacing in the plurality of cells, so that when there are the plurality of cells with the smallest subcarrier spacing in the plurality of cells, the network device and the terminal device use the aligned K1 set.

Implementation 2.4: The K1 set is a K1 set configured for a cell with the largest subcarrier spacing in the plurality of cells. In this way, with reference to a feedback delay required for the PDSCH of the cell with the largest subcarrier spacing, a feedback time unit may be determined based on the K1 set.

In another optional implementation, when there are a plurality of cells with a largest subcarrier spacing in the plurality of cells, the K1 set is a K1 set configured for a cell with a smallest or largest index in the cells with the largest subcarrier spacing in the plurality of cells, so that when there are the plurality of cells with the largest subcarrier spacing in the plurality of cells, the network device and the terminal device use the aligned K1 set.

Implementation 2.5: The K1 set is a K1 set associated with the first configuration information configured by the network device. In this way, the network device adjusts a relationship between a feedback delay and resource overheads in time based on system load and a requirement by using the K1 set associated with the first configuration information.

Implementation 2.6: The K1 set is a K1 set associated with the predefined first configuration information. In this way, resource overheads required for configuration and complexity are reduced.

In the foregoing optional Implementations 2.1 to 2.6, the K1 set is not limited to the K1 set configured for the PCell or the PUCCH SCell, so that flexibility of transmitting the HARQ feedback information can be further improved.

### Embodiment 2: Feedback information transmission method 200

When a time-frequency resource used to send HARQ feedback information is determined, if the time-frequency resource used to send the HARQ feedback information is unavailable, for example, the time-frequency resource used to send the HARQ feedback information conflicts with a time domain resource occupied by another to-be-sent information in time domain, or overlaps a downlink symbol or a flexible symbol, to send the HARQ feedback information, this application provides a feedback information transmission method if the time-frequency resource used to send the HARQ feedback information is re-determined. That is, when a first PUCCH resource used to send the HARQ feedback information overlaps the downlink symbol or the flexible symbol in time domain, how to transmit the HARQ feedback information of a PDSCH needs to be resolved. The following describes the feedback information transmission method 200 with reference to the accompanying drawings.

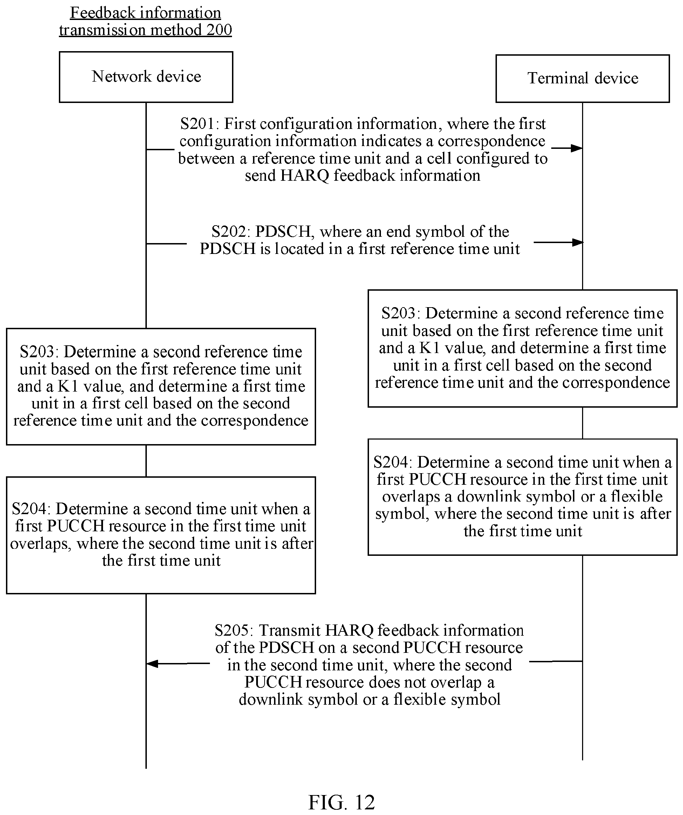

FIG. 12 is a schematic flowchart of a feedback information transmission method 200 according to an embodiment of this application. As shown in FIG. 12, the feedback information transmission method 200 includes but is not limited to the following steps.

S201: A network device sends first configuration information, where the first configuration information indicates a correspondence between M reference time units and a plurality of cells configured to send hybrid automatic repeat request HARQ feedback information in the M reference time units. Correspondingly, a terminal device receives the first configuration information.

S202: The network device sends a PDSCH. Correspondingly, the terminal device receives the PDSCH.

S203: The network device determines a second reference time unit in the M reference time units based on a first reference time unit, and determines a first time unit in a first cell based on the second reference time unit and the correspondence. Correspondingly, the terminal device also determines the second reference time unit in the M reference time units based on the first reference time unit, and determines the first time unit in the first cell based on the second reference time unit and the correspondence.

For related descriptions of steps S201 to S203, refer to related content in the feedback information transmission method 100. Details are not described herein again. For example, for determining of the first cell and the first time unit in step S203, refer to related content of the target cell and the target time unit in the feedback information transmission method 100. Details are not described herein again.

When a first PUCCH resource used to transmit HARQ feedback information of the PDSCH overlaps a downlink symbol or a flexible symbol in time domain, steps S204 and S205 may be performed. The first PUCCH resource is a PUCCH resource that is in the first cell, is located in the first time unit, and is configured to carry the HARQ feedback information of the PDSCH.

S204: The terminal device determines a second time unit. Correspondingly, the network device also determines the second time unit. The second time unit is after the first time unit.

S205: The terminal device sends the HARQ feedback information of the PDSCH on a second PUCCH resource in the second time unit. Correspondingly, the network device receives the HARQ feedback information of the PDSCH on the second PUCCH resource in the second time unit. The second PUCCH resource does not overlap a downlink symbol or a flexible symbol in time domain.

Optionally, in the feedback information transmission method 200, a first subcarrier spacing may be known in the manners described in Implementation 1.1 to Implementation 1.3 described in the feedback information transmission method 100; and/or in the feedback information transmission method 200, a required K1 set may be known in the manners described in Implementation 2.1 to Implementation 2.6 described in the feedback information transmission method 100. Therefore, in the feedback information transmission method 200, flexibility, a success rate, and the like of transmitting the HARQ feedback information can be further improved.

Optionally, for the feedback information transmission method 200, the first subcarrier spacing may be a subcarrier spacing corresponding to a default cell, and/or the K1 set is a K1 set configured for the default cell. The default cell may be predefined or preconfigured. Alternatively, the default cell may be a PCell, a PUCCH SCell, or another specified cell.

It can be learned that when the first PUCCH resource overlaps the downlink symbol or the flexible symbol in time domain, the terminal device may switch the HARQ feedback information to another time unit for sending. This resolves low data transmission reliability because the HARQ feedback information cannot be sent and is discarded when the first PUCCH resource overlaps the downlink symbol or the flexible symbol. Therefore, in the feedback information transmission method 200, a success rate of transmitting the HARQ feedback information can be improved. In an optional implementation, the second time unit is a time unit in a second cell. The second cell is the first cell, or a cell other than the first cell in the plurality of cells. It can be learned that, in the feedback information transmission method 200, the HARQ feedback information is transmitted in time through switching between the time domains or switching of the time domain and a frequency domain. This avoids that the HARQ feedback information cannot be sent or is discarded because the PUCCH resource overlaps the downlink symbol or the flexible symbol, and improves a success rate of transmitting the HARQ feedback information.

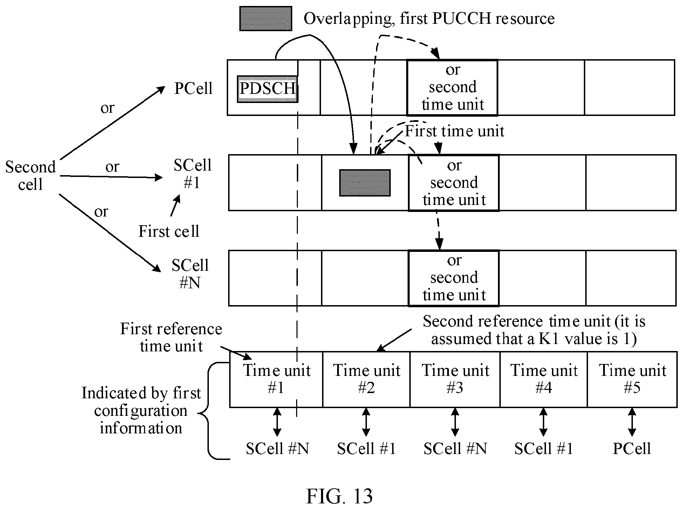

For example, FIG. 13 is a schematic diagram of a feedback information transmission method 200. It is assumed that a plurality of cells configured to send HARQ feedback information is a PCell, an SCell #1, and an SCell #N. It is assumed that subcarrier spacings respectively corresponding to the PCell, the SCell #1, and the SCell #N are equal, and the subcarrier spacing is a first subcarrier spacing. A correspondence indicated by first configuration information may be shown in FIG. 13. There is a one-to-one correspondence between a time unit #1 to a time unit #5 and the SCell #N, the SCell #1, the SCell #N, the SCell #1 and the PCell. As shown in FIG. 13, a PDSCH is in the PCell, and a first reference time unit is a time unit in which an end symbol of the PDSCH is located, namely, the time unit #1. Assumed that a used K1 set is a K1 set configured for the PCell, and a K1 value determined based on the K1 set is 1, a second reference time unit is the time unit #2. In this way, a first cell is the SCell #1, and a first time unit is a time unit shown by using a thick box in the SCell #1. If a first PUCCH resource determined by the terminal device in the first time unit shown by using the thick box in the SCell #1 overlaps a downlink symbol or a flexible symbol in time domain, the second time unit may be a time unit behind the time unit shown by using the thick box. As shown in FIG. 13, the second cell may be the first cell, namely, the SCell #1, the PCell, the SCell #N, or the like. Therefore, as shown in FIG. 13, the second time unit may be one of the second time units shown by using the thick boxes. A PUCCH resource determined in each second time unit shown by using the thick box does not overlap a downlink symbol or a flexible symbol in time domain. It can be learned that in this implementation, when the first PUCCH resource overlaps the downlink symbol or the flexible symbol, the HARQ feedback information may be switched to another time unit or another time unit of another cell for sending, so that flexibility and a success rate of transmitting the HARQ feedback information are improved.

The following separately describes possible implementations of the second cell, the second time unit, and the second PUCCH resource in Implementation 3.1 to Implementation 3.3. The second PUCCH resource is a candidate PUCCH resource in the second cell in the second time unit. For determining of the candidate PUCCH resource, refer to the foregoing related content. Details are not described herein again.

Implementation 3.1: The second cell is a cell corresponding to a third reference time unit in M reference time units in a one-to-one correspondence, the second time unit is a time unit that is in the second cell and that overlaps the third reference time unit in time domain, and the second PUCCH resource is a candidate PUCCH resource in the second time unit.

The third reference time unit is an earliest available reference time unit in time domain in at least one available reference time unit. Each of the at least one available reference time unit is after the second reference time unit, a cell corresponding to each available reference time unit in the correspondence is an available candidate cell, a candidate PUCCH resource in a third time unit in the available candidate cell does not overlap a downlink symbol or a flexible symbol, and the third time unit is a time unit that is in the available candidate cell and that overlaps the reference time unit corresponding to the available candidate cell in the one-to-one correspondence.

In other words, the available reference time unit needs to meet the following conditions. (1) The available reference time unit is after the second reference time unit. (2) The corresponding cell in the correspondence is the available candidate cell. (3) The candidate PUCCH resource in the third time unit in the available candidate cell does not overlap the downlink symbol and the flexible symbol, and the third time unit is the time unit that is in the available candidate cell and that overlaps the reference time unit corresponding to the available candidate cell in time domain. For determining of the candidate PUCCH resource, refer to the foregoing related content. Details are not described herein again.

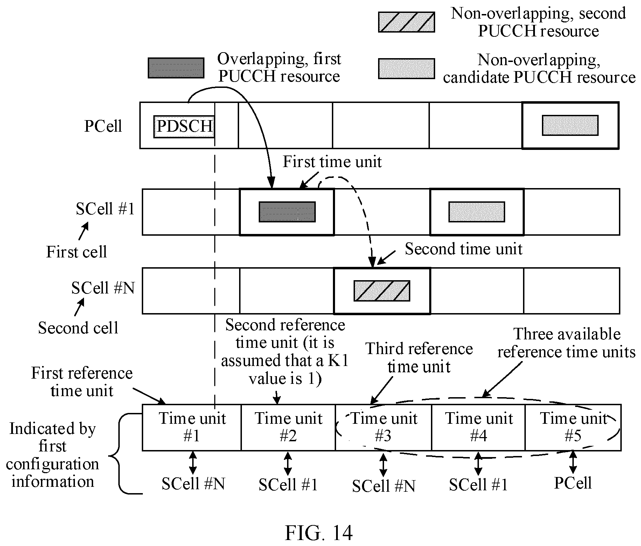

For example, as shown in FIG. 14, assuming that a first reference time unit is a time unit #1, and a second reference time unit is a time unit #2, in time units indicated by first configuration information, a time unit #3 to a time unit #5 are located behind the time unit #2. A time unit that is in an available candidate cell SCell #N corresponding to the time unit #3 and that overlaps the time unit #3 in time domain is a time unit shown by using a thick dashed-line box in the SCell #N. Assuming that a candidate PUCCH resource in the time unit shown by using the thick dashed-line box in the SCell #N does not overlap a downlink symbol and a flexible symbol, the time unit #3 is an available reference time unit. Similarly, a time unit that is in an SCell #1 corresponding to the time unit #4 and that overlaps the time unit #4 is a time unit shown by using a thick dashed-line box in the SCell #1. Assuming that a candidate PUCCH resource in the time unit shown by using the thick dashed-line box in the SCell #1 does not overlap a downlink symbol and a flexible symbol, the time unit #4 is also an available reference time unit. Similarly, a time unit that is in a PCell corresponding to the time unit #5 and that overlaps the time unit #5 is a time unit shown by using a thick dashed-line box in the PCell. Assuming that a candidate PUCCH resource in the time unit shown by using the thick dashed-line box in the PCell does not overlap a downlink symbol and a flexible symbol, the time unit #5 is also an available reference time unit. The candidate PUCCH resources in the three available reference time units are gray padding blocks in the thick dashed-line box shown in FIG. 14.

An earliest available reference time unit in the three available reference time units in time domain is the time unit #3, that is, a third reference time unit is the time unit #3. In this case, a second cell is the SCell #N corresponding to the time unit 3#, a second time unit is the time unit that is in the SCell #N and that overlaps the time unit #3 in time domain, and a second PUCCH resource is shown by using a gray padding block with stripes in the time unit.

It should be noted that FIG. 14 is described by using an example in which subcarrier spacings respectively corresponding to a plurality of cells are the same. When the subcarrier spacings are different, a time unit for sending HARQ feedback information is still a time unit that is in a cell corresponding to a third reference time unit in a one-to-one correspondence and that overlaps the third reference time unit in time domain. Optionally, assuming that there are a plurality of time units in the cell that overlap the third reference time unit in time domain, as described in the foregoing optional implementation, the HARQ feedback information may be sent in a time unit at a foremost time domain location, namely, a feedback time unit. For details, refer to the method for determining the target time unit shown in FIG. 9 or FIG. 11 in Embodiment 1. Details are not described herein again.

Optionally, as shown in FIG. 14, assuming that a candidate PUCCH resource corresponding to a time unit #3 overlaps a downlink symbol or a flexible symbol in time domain, the time unit #3 is not an available reference time unit. Correspondingly, an available reference time unit at a foremost time domain location is a time unit #4 instead of the time unit #3.

It can be learned that in this implementation, at least one available reference time unit may be determined based on the correspondence indicated by the first configuration information, and an earliest available reference time unit in time domain is selected from the at least one available reference time unit, to obtain the second cell, the second time unit, and the second PUCCH resource for sending the HARQ feedback information. Therefore, this avoids a problem that the HARQ feedback information cannot be sent when the first PUCCH resource overlaps the downlink symbol or the flexible symbol, and greatly improves a success rate of transmitting the HARQ feedback information.

Implementation 3.2: The second cell is a default cell, and the second time unit is an earliest available time unit in time domain in at least one available time unit in the second cell. A candidate PUCCH resource in each of the at least one available time unit does not overlap a downlink symbol or a flexible symbol.

The default cell may be predefined or preconfigured. Alternatively, the default cell may be a PCell, a PUCCH SCell, or another specified cell.

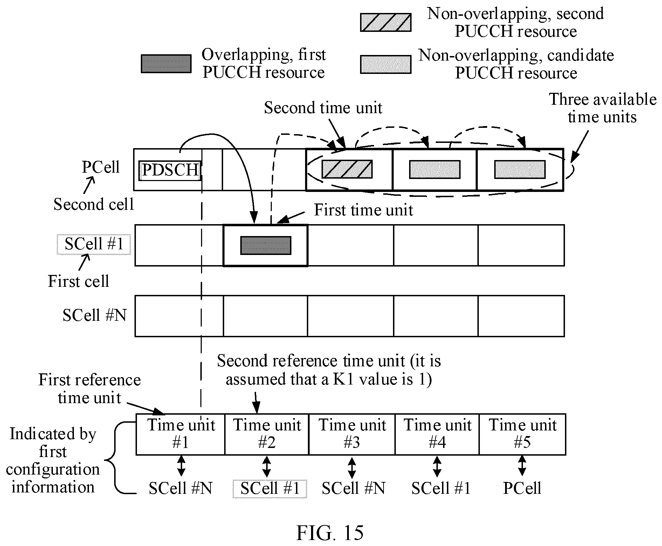

For example, as shown in FIG. 15, it is assumed that a default cell is a PCell, a first reference time unit is a time unit #1, a second reference time unit is a time unit #2, a first cell is an SCell #1 corresponding to the time unit #2, and a first time unit is a time unit shown by using a thick box in the SCell #1. Assuming that none of respective candidate PUCCH resources in three time units behind the first time unit in the PCell overlaps a downlink symbol and a flexible symbol, available time units in FIG. 15 are the three time units shown by using a dashed-line elliptic box in the PCell. Therefore, the second time unit is an earliest time unit in time domain in the three available time units, for example, a second time unit in the PCell shown in FIG. 15, and a second PUCCH resource is shown by using a gray padding block with stripes in the second time unit in the PCell shown in FIG. 15.

Optionally, when a first PUCCH resource in the first time unit in the first cell overlaps a downlink symbol or a flexible symbol, as shown by dashed-line arrows in FIG. 15, the terminal device may sequentially search for an available time unit based on a time domain sequence of the time units behind the first time unit on a default carrier, to obtain the second time unit and a second carrier, and further obtain the second PUCCH resource for transmitting HARQ feedback information. For example, in FIG. 15, assuming that only the time unit shown by using a last thick block in the PCell is the available time unit, the terminal device may sequentially determine, according to the dashed-line arrows, whether the candidate PUCCH resources in the time units overlap a downlink symbol or a flexible symbol, to obtain the available time unit, and further obtain the second time unit and the second cell.

It can be learned that in this implementation, when the HARQ feedback information cannot be sent because the first PUCCH resource overlaps the downlink symbol or the flexible symbol, the earliest available time unit in time domain may be determined as the second time unit on the default carrier, and the HARQ feedback information is sent on the candidate PUCCH resource in the second time unit. That is, the HARQ feedback information is transmitted in time through switching of the time domain and a frequency domain, so that a success rate of transmitting the HARQ feedback information is greatly improved.

Implementation 3.3: The second cell is a first cell, and the second time unit is an earliest available time unit in time domain in at least one available time unit in the second cell. A candidate PUCCH resource in each of the at least one available time unit does not overlap a downlink symbol or a flexible symbol.

It can be learned that in this implementation, when a first PUCCH resource overlaps a downlink symbol and a flexible symbol, the second time unit may continue to be determined in time units behind a first time unit in the first cell, so that the HARQ feedback information is sent in time.

The following describes the available time unit, the candidate PUCCH resource, the second time unit, and the like in this implementation with reference to the accompanying drawings by using an example.

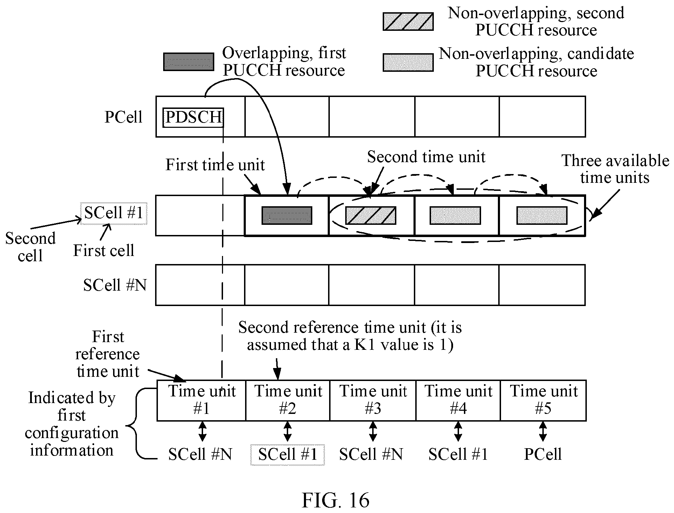

For example, as shown in FIG. 16, a first reference time unit is a time unit #1, a second reference time unit is a time unit #2, a first carrier is an SCell #1 corresponding to the time unit #2, and a first time unit is a time unit shown by using a thick block in the SCell #1. Assuming that none of respective candidate PUCCH resources in three time units behind the first time unit in the SCell #1 overlaps a downlink symbol and a flexible symbol, available time units in FIG. 16 may be the three time units in a dashed-line elliptic box in the SCell #1. Therefore, the second time unit is an earliest time unit in time domain in the three available time units, for example, a second time unit in the PCell shown in FIG. 16, and a second PUCCH resource is shown by using a gray padding block with stripes in the second time unit in the PCell shown in FIG. 16.

Optionally, when a first PUCCH resource overlaps a downlink symbol or a flexible symbol, as shown by dashed-line arrows in FIG. 16, the terminal device may sequentially search for an available time unit based on a time domain sequence of the time units behind the first time unit in the first cell, to obtain the second time unit and a second cell, and further obtain the second PUCCH resource for transmitting HARQ feedback information. For example, in FIG. 16, assuming that only the time unit shown by using a last thick box in the SCell #1 is the available time unit, the terminal device may sequentially determine, according to the dashed line arrows, whether the reference PUCCH resources in the time units overlap a downlink symbol and a flexible symbol, until the terminal device finds the time unit shown by using the last thick box, to obtain the available time unit, and further obtain the second time unit.

It can be learned that in this implementation, when the first PUCCH resource overlaps the downlink symbol or the flexible symbol, the earliest available time unit in time domain may continue to be determined as the second time unit in the first cell, and the HARQ feedback information is sent on the candidate PUCCH resource in the second time unit, so that flexibility and a success rate of transmitting the HARQ feedback information are greatly improved.

It should be understood that if determining, according to a method different from the method shown in the method 100, that a time-frequency resource for sending the HARQ feedback information is unavailable, the terminal device needs to re-determine a time-frequency resource for sending the HARQ feedback information, where a time-frequency resource switching method shown in the method 200 is also applicable. That is, the method for determining the first PUCCH resource in the feedback information transmission method 200 is not limited in this application.

For example, it is assumed that the first PUCCH resource is determined in the semi-persistent scheduling manner in 2.1 or the dynamic scheduling manner in 2.2. To be specific, the cell in which the PDSCH is located is configured to send the HARQ feedback information of the PDSCH in the PCell or the PUCCH SCell, where the time unit in which the end symbol of the PDSCH is located is a fourth time unit, and a feedback time unit determined based on the fourth time unit and the K1 value corresponding to the K1 indication field in the DCI in the K1 set is a fifth time unit. In this case, if the first PUCCH resource for sending the HARQ feedback information in the fifth time unit in the PCell or the PUCCH SCell overlaps a time domain resource, a downlink symbol, or a flexible symbol of other information in time domain, the HARQ feedback information may be switched to another cell and another time unit for sending according to the feedback information transmission method 200. For example, the terminal device may use the fifth time unit in which the HARQ feedback information is sent as the first time unit in the feedback information transmission method 200, to perform content described in the foregoing Implementations 3.1 to 3.3, and determine a time unit without overlapping, to send the HARQ feedback information.

In addition, the PDSCH in Embodiment 1 and Embodiment 2 in this application may be a semi-persistently scheduled PDSCH, or may be a dynamically scheduled PDSCH. If the PDSCH is the dynamically scheduled PDSCH, DCI for scheduling the PDSCH may not include an indication field for directly indicating a carrier on which the HARQ feedback information is located.

In other words, the HARQ feedback information transmitted in the target time unit in the target cell in Embodiment 1, or the HARQ feedback information transmitted on the second PUCCH resource in the second time unit of the second cell in Embodiment 2 is HARQ feedback information of the semi-persistent scheduled PDSCH, or HARQ feedback information of the semi-persistent scheduled PDSCH and the dynamically scheduled PDSCH.

In this embodiment of this application, the first cell, the second cell, and the target cell may be different bandwidth parts (bandwidth parts, BWPs) in a same cell, and the cell may be a PCell or an SCell. For example, the first cell is a BWP 1 in the PCell, and the second cell or the target cell is a BWP 2 in the PCell.

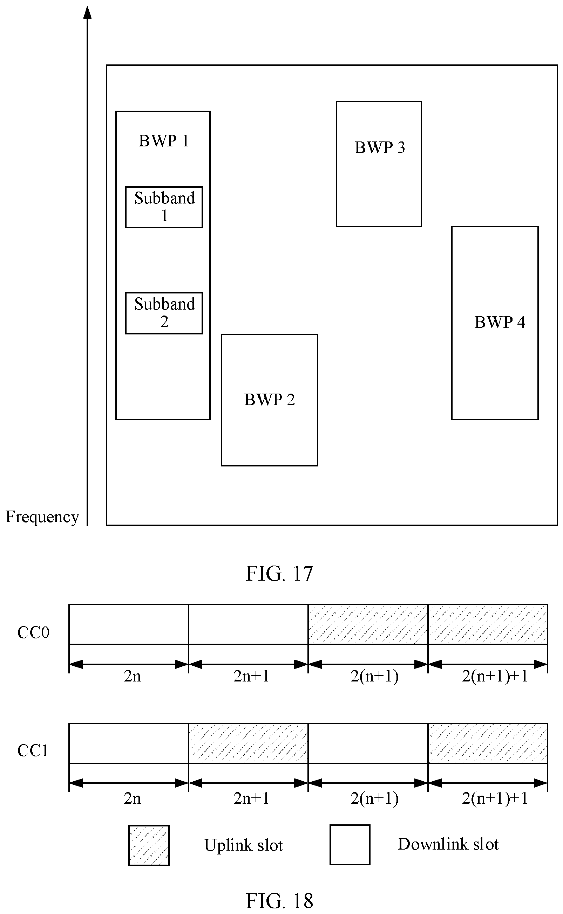

The first cell or the second cell may be a part of frequency resources that have been configured for a cell, for example, different BWPs of a same cell or different subbands (subbands) of a same BWP. The BWP may be a part of frequency resources that have been configured for a cell, and a frequency resource occupied by the subband is a part of frequency resources of one BWP. The following provides descriptions with reference to FIG. 17.

FIG. 17 is a schematic diagram of distribution of BWPs. As shown in FIG. 17, if BWPs of a cell include a BWP 1 to a BWP 4, and the BWP 1 includes a subband 1 and a subband 2, a target cell may be any one of the BWP 1 to the BWP 4. A first cell may include any one of the BWP 1 to the BWP 4. When a second cell is cell other than the first cell, the second cell may be a BWP other than the first cell in the BWP 1 to the BWP 4. Alternatively, a first cell may be any one of the subbands in the BWP 1, for example, the subband 1, and a second cell may be another subband other than the first cell in the BWP 1, for example, the subband 2.

Different cells, different BWPs in a same cell, or different subbands in a same BWP in a same cell may have different slot format configurations. FIG. 18 is a schematic diagram of slot format configurations in two cells. As shown in FIG. 18, time domain resource configurations of four time units in a cell 0 (namely, CC0) may be sequentially downlink, downlink, uplink, and uplink, and time domain resource configurations of four time units in a cell 1 (namely, CC1) may be sequentially downlink, uplink, downlink, and uplink.

In this embodiment of this application, the time unit may be a slot, a sub-slot (sub-slot), an OFDM symbol, or the like.

When the communication apparatus is a chip used in a terminal device, the chip in the terminal device implements functions of the terminal device in the foregoing method embodiments. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the communication apparatus is a module used in a network device, the module in the network device implements functions of the network device in the foregoing method embodiments. The module in the network device receives information from another module (for example, a radio frequency module or an antenna) in the network device, where the information is sent by a terminal device to the network device. Alternatively, the module in the network device sends information to another module (for example, a radio frequency module or an antenna) in the network device, where the information is sent by the network device to a terminal device. The module in the network device herein may be a baseband chip in the network device, or may be a DU or another module. The DU herein may be a DU in an open radio access network (open radio access network, O-RAN) architecture.

It should be noted that the processor in this embodiment of this application may be a central processing unit (Central Processing Unit, CPU), another general-purpose processor, a digital signal processor (Digital Signal Processor, DSP), an application-specific integrated circuit (Application-Specific Integrated Circuit, ASIC), a field programmable gate array (Field Programmable Gate Array, FPGA), another programmable logic device, a transistor logic device, a hardware component, or any combination thereof. The general-purpose processor may be a microprocessor or any conventional processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, so that the processor can read information from the storage medium and write information into the storage medium. Certainly, the storage medium may alternatively be a component of the processor. The processor and the storage medium may be disposed in the ASIC. In addition, the ASIC may be located in the network device or the terminal device. Certainly, the processor and the storage medium may alternatively exist as discrete components in the network device or the terminal device.

All or some of the foregoing embodiments may be implemented by software, hardware, firmware, or any combination thereof. When software is used to implement the embodiments, all or some of embodiments may be implemented in a form of a computer program product. The computer program product includes one or more computer programs and instructions. When the computer programs or the instructions are loaded and executed on a computer, the procedures or the functions according to embodiments of this application are all or partially implemented. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, such as a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or nonvolatile storage medium, or may include two types of storage media: a volatile storage medium and a non-volatile storage medium.

In embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

## Claims

1. A feedback information transmission method, performed by a terminal device (103) or a module in the terminal device, wherein the method comprises:
receiving first configuration information, wherein the first configuration information indicates a one-to-one correspondence between M reference time units and a plurality of cells configured to send hybrid automatic repeat request HARQ feedback information in the M reference time units, and M is a positive integer;
receiving a physical downlink shared channel PDSCH, wherein an end symbol of the PDSCH is located in a first reference time unit in the M reference time units;
determining a second reference time unit in the M reference time units based on the first reference time unit, wherein the second reference time unit is after the first reference time unit, the second reference time unit and the first reference time unit are separated by K1 reference time units, and K1 is an integer greater than or equal to 0;
determining a first time unit in a first cell based on the second reference time unit and the one-to-one correspondence, wherein the first cell is a cell corresponding to the second reference time unit in the one-to-one correspondence, and the first time unit is a time unit that is in the first cell and that overlaps the second reference time unit in time domain;
determining a second time unit when a first physical uplink control channel PUCCH resource overlaps a downlink symbol or a flexible symbol in time domain, wherein the second time unit is after the first time unit, and the first PUCCH resource is a PUCCH resource that is in the first cell, is located in the first time unit, and is configured to carry HARQ feedback information of the PDSCH; and
sending the HARQ feedback information of the PDSCH on a second PUCCH resource in the second time unit, wherein the second PUCCH resource does not overlap a downlink symbol or a flexible symbol in time domain, wherein
time domain lengths of the M reference time units are the same, the time domain lengths of the reference time units are determined based on a first subcarrier spacing, and the first subcarrier spacing is: a largest subcarrier spacing in subcarrier spacings corresponding to the plurality of cells, or a smallest subcarrier spacing in subcarrier spacings corresponding to the plurality of cells..

2. The method according to claim 1, wherein the second time unit is a time unit in a second cell; and
the second cell is a cell corresponding to a third reference time unit in the M reference time units in the one-to-one correspondence, the second time unit is a time unit that is in the second cell and that overlaps the third reference time unit in time domain, and the third reference time unit is an earliest available reference time unit in time domain in at least one available reference time unit; and each of the at least one available reference time unit is after the second reference time unit, a cell corresponding to each available reference time unit in the one-to-one correspondence is an available candidate cell, a candidate PUCCH resource in a third time unit in the available candidate cell does not overlap a downlink symbol or a flexible symbol, and the third time unit is a time unit that is in the available candidate cell and that overlaps the reference time unit in time domain corresponding to the available candidate cell in the one-to-one correspondence; or
the second cell is a primary cell PCell or the first cell, the second time unit is an earliest available time unit in time domain in at least one available time unit in the second cell, and a candidate PUCCH resource in each of the at least one available time unit does not overlap a downlink symbol or a flexible symbol, wherein
the candidate PUCCH resource is configured to carry the HARQ feedback information.

3. The method according to any one of claims 1 or 2, wherein
K1 is indicated by downlink control information DCI for scheduling the PDSCH, and K1 is a value in a K1 set.

4. The method according to claim 3, wherein
the K1 set is a K1 set configured for a cell in which the PDSCH is located;
the K1 set is a K1 set configured for a carrier of the primary cell accessed by the terminal device in the plurality of cells;
the K1 set is a K1 set configured for a carrier with a smallest subcarrier spacing in the plurality of cells; or
the K1 set is a K1 set configured for a carrier with a largest subcarrier spacing in the plurality of cells.

5. The method according to any one of claims 2 to 4, wherein there are a plurality of time units in the second cell that overlap the third reference time unit in time domain, the second time unit is a time unit at a foremost time domain location of the plurality of time units in the second cell that overlap the third reference time unit in time domain.

6. A feedback information transmission method, performed by a network device (101) or a module in the network device, wherein the method comprises:
sending first configuration information, wherein the first configuration information indicates a one-to-one correspondence between M reference time units and a plurality of cells configured to send hybrid automatic repeat request HARQ feedback information in the M reference time units, and M is a positive integer;
sending a physical downlink shared channel PDSCH, wherein an end symbol of the PDSCH is located in a first reference time unit in the M reference time units;
determining a second reference time unit in the M reference time units based on the first reference time unit, wherein the second reference time unit is after the first reference time unit, the second reference time unit and the first reference time unit are separated by K1 reference time units, and K1 is an integer greater than or equal to 0;
determining a first time unit in a first cell based on the second reference time unit and the one-to-one correspondence, wherein the first cell is a cell corresponding to the second reference time unit in the one-to-one correspondence, and the first time unit is a time unit that is in the first cell and that overlaps the second reference time unit in time domain;
determining a second time unit when a first physical uplink control channel PUCCH resource overlaps a downlink symbol or a flexible symbol in time domain, wherein the second time unit is after the first time unit, and the first PUCCH resource is a PUCCH resource that is in the first cell, is located in the first time unit, and is configured to carry HARQ feedback information of the PDSCH; and
receiving the HARQ feedback information of the PDSCH on a second PUCCH resource in the second time unit, wherein the second PUCCH resource does not overlap a downlink symbol or a flexible symbol in time domain, wherein
time domain lengths of the M reference time units are the same, the time domain lengths of the reference time units are determined based on a first subcarrier spacing, and the first subcarrier spacing is: a largest subcarrier spacing in subcarrier spacings corresponding to the plurality of cells, or a smallest subcarrier spacing in subcarrier spacings corresponding to the plurality of cells .

7. The method according to claim 6, wherein the second time unit is a time unit in a second cell; and
the second cell is a cell corresponding to a third reference time unit in the M reference time units in the one-to-one correspondence, the second time unit is a time unit that is in the second cell and that overlaps the third reference time unit in time domain, and the third reference time unit is an earliest available reference time unit in time domain in at least one available reference time unit; and each of the at least one available reference time unit is after the second reference time unit, a cell corresponding to each available reference time unit in the one-to-one correspondence is an available candidate cell, a candidate PUCCH resource in a third time unit in the available candidate cell does not overlap a downlink symbol or a flexible symbol, and the third time unit is a time unit that is in the available candidate cell and that overlaps the reference time unit corresponding to the available candidate cell in the one-to-one correspondence; or
the second cell is a primary cell PCell or the first cell, the second time unit is an earliest available time unit in time domain in at least one available time unit in the second cell, and a candidate PUCCH resource in each of the at least one available time unit does not overlap a downlink symbol or a flexible symbol, wherein the candidate PUCCH resource is configured to carry the HARQ feedback information.

8. The method according to any one of claims 6 or 7, wherein
K1 is indicated by downlink control information DCI for scheduling the PDSCH, and K1 is a value in a K1 set.

9. The method according to claim 10, wherein
the K1 set is a K1 set configured for a cell in which the PDSCH is located;
the K1 set is a K1 set configured for a carrier of the primary cell accessed by the terminal device in the plurality of cells;
the K1 set is a K1 set configured for a carrier with a smallest subcarrier spacing in the plurality of cells; or
the K1 set is a K1 set configured for a carrier with a largest subcarrier spacing in the plurality of cells.

10. The method according to any one of claims 7 to 9, wherein there are a plurality of time units in the second cell that overlap the third reference time unit in time domain, the second time unit is a time unit at a foremost time domain location of the plurality of time units in the second cell that overlap the third reference time unit in time domain.

11. A communication apparatus (1900), wherein the communication apparatus is configured to perform the method according to any one of claims 1 to 5.

12. A communication apparatus (1900), wherein the communication apparatus is configured to perform the method according to any one of claims 6 to 10.

13. A computer program product comprising instructions, wherein when the instructions are run on a computer, the computer is enabled to perform the method according to any one of claims 1 to 10.

## Patentansprüche

1. Verfahren zur Übertragung von Rückmeldeinformationen, das durch ein Endgerät (103) oder ein Modul in dem Endgerät durchgeführt wird, wobei das Verfahren Folgendes umfasst:
Empfangen erster Konfigurationsinformationen, wobei die ersten Konfigurationsinformationen eine Eins-zu-Eins-Entsprechung zwischen M Referenzzeiteinheiten und einer Vielzahl von Zellen angeben, die dazu konfiguriert sind, Rückmeldeinformationen zur hybriden automatischen Wiederholungsanforderung, HARQ, in den M Referenzzeiteinheiten zu senden, und M eine positive Ganzzahl ist;
Empfangen eines physischen gemeinsam genutzten Downlink-Kanals, PDSCH, wobei sich ein Endsymbol des PDSCH in einer ersten Referenzzeiteinheit in den M Referenzzeiteinheiten befindet;
Bestimmen einer zweiten Referenzzeiteinheit in den M Referenzzeiteinheiten basierend auf der ersten Referenzzeiteinheit, wobei die zweite Referenzzeiteinheit nach der ersten Referenzzeiteinheit liegt, die zweite Referenzzeiteinheit und die erste Referenzzeiteinheit durch K1 Referenzzeiteinheiten getrennt sind und K1 eine Ganzzahl größer oder gleich 0 ist;
Bestimmen einer ersten Zeiteinheit in einer ersten Zelle basierend auf der zweiten Referenzzeiteinheit und der Eins-zu-Eins-Entsprechung, wobei die erste Zelle eine Zelle ist, die der zweiten Referenzzeiteinheit in der Eins-zu-Eins-Entsprechung entspricht, und die erste Zeiteinheit eine Zeiteinheit ist, die in der ersten Zelle liegt und die die zweite Referenzzeiteinheit in einer Zeitdomäne überlappt;
Bestimmen einer zweiten Zeiteinheit, wenn eine erste Ressource des physischen Uplink-Steuerkanals, PUCCH-Ressource, ein Downlink-Symbol oder ein flexibles Symbol in der Zeitdomäne überlappt, wobei die zweite Zeiteinheit nach der ersten Zeiteinheit liegt und die erste PUCCH-Ressource eine PUCCH-Ressource ist, die in der ersten Zelle liegt, sich in der ersten Zeiteinheit befindet und dazu konfiguriert ist, HARQ-Rückmeldeinformationen des PDSCH zu enthalten; und
Senden der HARQ-Rückmeldeinformationen des PDSCH auf einer zweiten PUCCH-Ressource in der zweiten Zeiteinheit, wobei die zweite PUCCH-Ressource ein Downlink-Symbol oder ein flexibles Symbol in der Zeitdomäne nicht überlappt, wobei
Zeitdomänenlängen der M Referenzzeiteinheiten gleich sind, die Zeitdomänenlängen der Referenzzeiteinheiten basierend auf einem ersten Unterträgerabstand bestimmt werden und der erste Unterträgerabstand wie folgt ist: ein größter Unterträgerabstand von Unterträgerabständen, die der Vielzahl von Zellen entsprechen, oder ein kleinster Unterträgerabstand von Unterträgerabständen, die der Vielzahl von Zellen entsprechen.

2. Verfahren nach Anspruch 1, wobei die zweite Zeiteinheit eine Zeiteinheit in einer zweiten Zelle ist; und
die zweite Zelle eine Zelle ist, die einer dritten Referenzzeiteinheit in den M Referenzzeiteinheiten in der Eins-zu-Eins-Entsprechung entspricht; die zweite Zeiteinheit eine Zeiteinheit ist, die sich in der zweiten Zelle befindet und die die dritte Referenzzeiteinheit in der Zeitdomäne überlappt, und die dritte Referenzzeiteinheit eine am frühesten verfügbare Referenzzeiteinheit in der Zeitdomäne in mindestens einer verfügbaren Referenzzeiteinheit ist; und jede der mindestens einen verfügbaren Referenzzeiteinheit nach der zweiten Referenzzeiteinheit liegt, eine Zelle, die jeder verfügbaren Referenzzeiteinheit in der Eins-zu-Eins-Entsprechung entspricht, eine verfügbare Kandidatenzelle ist, eine Kandidaten-PUCCH-Ressource in einer dritten Zeiteinheit in der verfügbaren Kandidatenzelle ein Downlink-Symbol oder ein flexibles Symbol nicht überlappt und die dritte Zeiteinheit eine Zeiteinheit ist, die in der verfügbaren Kandidatenzelle liegt und die die Referenzzeiteinheit in der Zeitdomäne überlappt, die der verfügbaren Kandidatenzelle in der Eins-zu-Eins-Entsprechung entspricht; oder
die zweite Zelle eine primäre Zelle, PCell, oder die erste Zelle ist, die zweite Zeiteinheit eine am frühesten verfügbare Zeiteinheit in der Zeitdomäne in mindestens einer verfügbaren Zeiteinheit in der zweiten Zelle ist und eine Kandidaten-PUCCH-Ressource in jeder der mindestens einen verfügbaren Zeiteinheit ein Downlink-Symbol oder ein flexibles Symbol nicht überlappt, wobei
die Kandidaten-PUCCH-Ressource dazu konfiguriert ist, die HARQ-Rückmeldeinformationen zu enthalten.

3. Verfahren nach einem der Ansprüche 1 oder 2, wobei
K1 durch Downlink-Steuerinformationen DCI zum Planen des PDSCH angegeben ist und K1 ein Wert in einem K1-Satz ist.

4. Verfahren nach Anspruch 3, wobei
der K1-Satz ein K1-Satz ist, der für eine Zelle konfiguriert ist, in der sich der PDSCH befindet;
der K1-Satz ein K1-Satz ist, der für einen Träger der primären Zelle konfiguriert ist, auf die das Endgerät in der Vielzahl von Zellen zugreift;
der K1-Satz ein K1-Satz ist, der für einen Träger mit einem kleinsten Unterträgerabstand in der Vielzahl von Zellen konfiguriert ist; oder
der K1-Satz ein K1-Satz ist, der für einen Träger mit einem größten Unterträgerabstand in der Vielzahl von Zellen konfiguriert ist.

5. Verfahren nach einem der Ansprüche 2 bis 4, wobei es in der zweiten Zelle eine Vielzahl von Zeiteinheiten gibt, die die dritte Referenzzeiteinheit in der Zeitdomäne überlappen, die zweite Zeiteinheit eine Zeiteinheit an einer vordersten Zeitdomänenposition der Vielzahl von Zeiteinheiten in der zweiten Zelle ist, die die dritte Referenzzeiteinheit in der Zeitdomäne überlappen.

6. Verfahren zur Übertragung von Rückmeldeinformationen, das durch ein Netzwerkgerät (101) oder ein Modul in dem Netzwerkgerät durchgeführt wird, wobei das Verfahren Folgendes umfasst:
Senden erster Konfigurationsinformationen, wobei die ersten Konfigurationsinformationen eine Eins-zu-Eins-Entsprechung zwischen M Referenzzeiteinheiten und einer Vielzahl von Zellen angeben, die dazu konfiguriert sind, Rückmeldeinformationen zur hybriden automatischen Wiederholungsanforderung, HARQ, in den M Referenzzeiteinheiten zu senden, und M eine positive Ganzzahl ist;
Senden eines physischen gemeinsam genutzten Downlink-Kanals, PDSCH, wobei sich ein Endsymbol des PDSCH in einer ersten Referenzzeiteinheit in den M Referenzzeiteinheiten befindet;
Bestimmen einer zweiten Referenzzeiteinheit in den M Referenzzeiteinheiten basierend auf der ersten Referenzzeiteinheit, wobei die zweite Referenzzeiteinheit nach der ersten Referenzzeiteinheit liegt, die zweite Referenzzeiteinheit und die erste Referenzzeiteinheit durch K1 Referenzzeiteinheiten getrennt sind und K1 eine Ganzzahl größer oder gleich 0 ist;
Bestimmen einer ersten Zeiteinheit in einer ersten Zelle basierend auf der zweiten Referenzzeiteinheit und der Eins-zu-Eins-Entsprechung, wobei die erste Zelle eine Zelle ist, die der zweiten Referenzzeiteinheit in der Eins-zu-Eins-Entsprechung entspricht, und die erste Zeiteinheit eine Zeiteinheit ist, die in der ersten Zelle liegt und die die zweite Referenzzeiteinheit in einer Zeitdomäne überlappt;
Bestimmen einer zweiten Zeiteinheit, wenn eine erste Ressource des physischen Uplink-Steuerkanals, PUCCH-Ressource, ein Downlink-Symbol oder ein flexibles Symbol in der Zeitdomäne überlappt, wobei die zweite Zeiteinheit nach der ersten Zeiteinheit liegt und die erste PUCCH-Ressource eine PUCCH-Ressource ist, die in der ersten Zelle liegt, sich in der ersten Zeiteinheit befindet und dazu konfiguriert ist, HARQ-Rückmeldeinformationen des PDSCH zu enthalten; und
Empfangen der HARQ-Rückmeldeinformationen des PDSCH auf einer zweiten PUCCH-Ressource in der zweiten Zeiteinheit, wobei die zweite PUCCH-Ressource ein Downlink-Symbol oder ein flexibles Symbol in der Zeitdomäne nicht überlappt, wobei
Zeitdomänenlängen der M Referenzzeiteinheiten gleich sind, die Zeitdomänenlängen der Referenzzeiteinheiten basierend auf einem ersten Unterträgerabstand bestimmt werden und der erste Unterträgerabstand wie folgt ist: ein größter Unterträgerabstand von Unterträgerabständen, die der Vielzahl von Zellen entsprechen, oder ein kleinster Unterträgerabstand von Unterträgerabständen, die der Vielzahl von Zellen entsprechen.

7. Verfahren nach Anspruch 6, wobei die zweite Zeiteinheit eine Zeiteinheit in einer zweiten Zelle ist; und
die zweite Zelle eine Zelle ist, die einer dritten Referenzzeiteinheit in den M Referenzzeiteinheiten in der Eins-zu-Eins-Entsprechung entspricht; die zweite Zeiteinheit eine Zeiteinheit ist, die sich in der zweiten Zelle befindet und die die dritte Referenzzeiteinheit in der Zeitdomäne überlappt, und die dritte Referenzzeiteinheit eine am frühesten verfügbare Referenzzeiteinheit in der Zeitdomäne in mindestens einer verfügbaren Referenzzeiteinheit ist; und jede der mindestens einen verfügbaren Referenzzeiteinheit nach der zweiten Referenzzeiteinheit liegt, eine Zelle, die jeder verfügbaren Referenzzeiteinheit in der Eins-zu-Eins-Entsprechung entspricht, eine verfügbare Kandidatenzelle ist, eine Kandidaten-PUCCH-Ressource in einer dritten Zeiteinheit in der verfügbaren Kandidatenzelle ein Downlink-Symbol oder ein flexibles Symbol nicht überlappt und die dritte Zeiteinheit eine Zeiteinheit ist, die in der verfügbaren Kandidatenzelle liegt und die die Referenzzeiteinheit überlappt, die der verfügbaren Kandidatenzelle in der Eins-zu-Eins-Entsprechung entspricht; oder
die zweite Zelle eine primäre Zelle, PCell, oder die erste Zelle ist, die zweite Zeiteinheit eine am frühesten verfügbare Zeiteinheit in der Zeitdomäne in mindestens einer verfügbaren Zeiteinheit in der zweiten Zelle ist und eine Kandidaten-PUCCH-Ressource in jeder der mindestens einen verfügbaren Zeiteinheit ein Downlink-Symbol oder ein flexibles Symbol nicht überlappt, wobei die Kandidaten-PUCCH-Ressource dazu konfiguriert ist, die HARQ-Rückmeldeinformationen zu enthalten.

8. Verfahren nach einem der Ansprüche 6 oder 7, wobei
K1 durch Downlink-Steuerinformationen DCI zum Planen des PDSCH angegeben ist und K1 ein Wert in einem K1-Satz ist.

9. Verfahren nach Anspruch 10, wobei
der K1-Satz ein K1-Satz ist, der für eine Zelle konfiguriert ist, in der sich der PDSCH befindet;
der K1-Satz ein K1-Satz ist, der für einen Träger der primären Zelle konfiguriert ist, auf die das Endgerät in der Vielzahl von Zellen zugreift;
der K1-Satz ein K1-Satz ist, der für einen Träger mit einem kleinsten Unterträgerabstand in der Vielzahl von Zellen konfiguriert ist; oder
der K1-Satz ein K1-Satz ist, der für einen Träger mit einem größten Unterträgerabstand in der Vielzahl von Zellen konfiguriert ist.

10. Verfahren nach einem der Ansprüche 7 bis 9, wobei es in der zweiten Zelle eine Vielzahl von Zeiteinheiten gibt, die die dritte Referenzzeiteinheit in der Zeitdomäne überlappen, die zweite Zeiteinheit eine Zeiteinheit an einer vordersten Zeitdomänenposition der Vielzahl von Zeiteinheiten in der zweiten Zelle ist, die die dritte Referenzzeiteinheit in der Zeitdomäne überlappen.

11. Kommunikationsvorrichtung (1900), wobei die Kommunikationsvorrichtung dazu konfiguriert ist, das Verfahren nach einem der Ansprüche 1 bis 5 durchzuführen.

12. Kommunikationsvorrichtung (1900), wobei die Kommunikationsvorrichtung dazu konfiguriert ist, das Verfahren nach einem der Ansprüche 6 bis 10 durchzuführen.

13. Computerprogrammprodukt, umfassend Anweisungen, wobei, wenn die Anweisungen auf einem Computer ausgeführt werden, der Computer in die Lage versetzt wird, das Verfahren nach einem der Ansprüche 1 bis 10 durchzuführen.

## Revendications

1. Procédé de transmission d'informations de rétroaction, réalisé par un dispositif terminal (103) ou un module dans le dispositif terminal, dans lequel le procédé comprend :
la réception de premières informations de configuration, dans lequel les premières informations de configuration indiquent une correspondance biunivoque entre M unités de temps de référence et une pluralité de cellules configurées pour envoyer des informations de rétroaction de demande de répétition automatique hybride, HARQ, dans les M unités de temps de référence, et M est un entier positif ;
la réception d'un canal partagé de liaison descendante physique, PDSCH, dans lequel un symbole final du PDSCH est situé dans une première unité de temps de référence parmi les M unités de temps de référence ;
la détermination d'une deuxième unité de temps de référence parmi les M unités de temps de référence sur la base de la première unité de temps de référence, dans lequel la deuxième unité de temps de référence est après la première unité de temps de référence, la deuxième unité de temps de référence et la première unité de temps de référence sont séparées par K1 unités de temps de référence, et K1 est un entier supérieur ou égal à 0 ;
la détermination d'une première unité de temps dans une première cellule sur la base de la deuxième unité de temps de référence et de la correspondance biunivoque, dans lequel la première cellule est une cellule correspondant à la deuxième unité de temps de référence dans la correspondance biunivoque, et la première unité de temps est une unité de temps qui se trouve dans la première cellule et qui chevauche la deuxième unité de temps de référence dans le domaine temporel ;
la détermination d'une deuxième unité de temps lorsqu'une première ressource de canal de commande de liaison montante physique, PUCCH, chevauche un symbole de liaison descendante ou un symbole flexible dans le domaine temporel, dans lequel la deuxième unité de temps est après la première unité de temps, et la première ressource PUCCH est une ressource PUCCH qui se trouve dans la première cellule, qui est située dans la première unité de temps et qui est configurée pour transporter les informations de rétroaction HARQ du PDSCH ; et
l'envoi des informations de rétroaction HARQ du PDSCH sur une seconde ressource PUCCH dans la deuxième unité de temps, dans lequel la seconde ressource PUCCH ne chevauche pas un symbole de liaison descendante ou un symbole flexible dans le domaine temporel, dans lequel
des longueurs de domaine temporel des M unités de temps de référence sont identiques, les longueurs de domaine temporel des unités de temps de référence sont déterminées sur la base d'un premier espacement de sous-porteuses, et le premier espacement de sous-porteuses est : un plus grand espacement de sous-porteuses parmi les espacements de sous-porteuses correspondant à la pluralité de cellules, ou un plus petit espacement de sous-porteuses parmi les espacements de sous-porteuses correspondant à la pluralité de cellules.

2. Procédé selon la revendication 1, dans lequel la deuxième unité de temps est une unité de temps dans une seconde cellule ; et
la seconde cellule est une cellule correspondant à une troisième unité de temps de référence parmi les M unités de temps de référence dans la correspondance biunivoque, la deuxième unité de temps est une unité de temps qui se trouve dans la seconde cellule et qui chevauche la troisième unité de temps de référence dans le domaine temporel, et la troisième unité de temps de référence est une unité de temps de référence disponible en premier dans le domaine temporel parmi au moins une unité de temps de référence disponible ; et chacune de l'au moins une unité de temps de référence disponible est après la deuxième unité de temps de référence, une cellule correspondant à chaque unité de temps de référence disponible dans la correspondance biunivoque est une cellule candidate disponible, une ressource PUCCH candidate dans une troisième unité de temps dans la cellule candidate disponible ne chevauche pas un symbole de liaison descendante ou un symbole flexible, et la troisième unité de temps est une unité de temps qui se trouve dans la cellule candidate disponible et qui chevauche l'unité de temps de référence dans le domaine temporel correspondant à la cellule candidate disponible dans la correspondance biunivoque ; ou
la seconde cellule est une cellule primaire, PCell, ou la première cellule, la deuxième unité de temps est une unité de temps disponible en premier dans le domaine temporel parmi au moins une unité de temps disponible dans la seconde cellule, et une ressource PUCCH candidate dans chacune de l'au moins une unité de temps disponible ne chevauche pas un symbole de liaison descendante ou un symbole flexible, dans lequel
la ressource PUCCH candidate est configurée pour transporter les informations de rétroaction HARQ.

3. Procédé selon l'une quelconque des revendications 1 ou 2, dans lequel
K1 est indiqué par des informations de commande de liaison descendante, DCI, pour la planification du PDSCH, et K1 est une valeur dans un ensemble K1.

4. Procédé selon la revendication 3, dans lequel
l'ensemble K1 est un ensemble K1 configuré pour une cellule dans laquelle est situé le PDSCH ;
l'ensemble K1 est un ensemble K1 configuré pour une porteuse de la cellule primaire accessible par le dispositif terminal dans la pluralité de cellules ;
l'ensemble K1 est un ensemble K1 configuré pour une porteuse avec un plus petit espacement de sous-porteuses dans la pluralité de cellules ; ou
l'ensemble K1 est un ensemble K1 configuré pour une porteuse avec un plus grand espacement de sous-porteuses dans la pluralité de cellules.

5. Procédé selon l'une quelconque des revendications 2 à 4, dans lequel il existe une pluralité d'unités de temps dans la seconde cellule qui chevauchent la troisième unité de temps de référence dans le domaine temporel, la deuxième unité de temps est une unité de temps au niveau d'un emplacement de domaine temporel le plus avancé de la pluralité d'unités de temps dans la seconde cellule qui chevauchent la troisième unité de temps de référence dans le domaine temporel.

6. Procédé de transmission d'informations de rétroaction, réalisé par un dispositif réseau (101) ou un module dans le dispositif réseau, dans lequel le procédé comprend :
l'envoi de premières informations de configuration, dans lequel les premières informations de configuration indiquent une correspondance biunivoque entre M unités de temps de référence et une pluralité de cellules configurées pour envoyer des informations de rétroaction de demande de répétition automatique hybride, HARQ, dans les M unités de temps de référence, et M est un entier positif ;
l'envoi d'un canal partagé de liaison descendante physique, PDSCH, dans lequel un symbole final du PDSCH est situé dans une première unité de temps de référence parmi les M unités de temps de référence ;
la détermination d'une deuxième unité de temps de référence parmi les M unités de temps de référence sur la base de la première unité de temps de référence, dans lequel la deuxième unité de temps de référence est après la première unité de temps de référence, la deuxième unité de temps de référence et la première unité de temps de référence sont séparées par K1 unités de temps de référence, et K1 est un entier supérieur ou égal à 0 ;
la détermination d'une première unité de temps dans une première cellule sur la base de la deuxième unité de temps de référence et de la correspondance biunivoque, dans lequel la première cellule est une cellule correspondant à la deuxième unité de temps de référence dans la correspondance biunivoque, et la première unité de temps est une unité de temps qui se trouve dans la première cellule et qui chevauche la deuxième unité de temps de référence dans le domaine temporel ;
la détermination d'une deuxième unité de temps lorsqu'une première ressource de canal de commande de liaison montante physique, PUCCH, chevauche un symbole de liaison descendante ou un symbole flexible dans le domaine temporel, dans lequel la deuxième unité de temps est après la première unité de temps, et la première ressource PUCCH est une ressource PUCCH qui se trouve dans la première cellule, qui est située dans la première unité de temps et qui est configurée pour transporter les informations de rétroaction HARQ du PDSCH ; et
la réception des informations de rétroaction HARQ du PDSCH sur une seconde ressource PUCCH dans la deuxième unité de temps, dans lequel la seconde ressource PUCCH ne chevauche pas un symbole de liaison descendante ou un symbole flexible dans le domaine temporel, dans lequel
des longueurs de domaine temporel des M unités de temps de référence sont identiques, les longueurs de domaine temporel des unités de temps de référence sont déterminées sur la base d'un premier espacement de sous-porteuses, et le premier espacement de sous-porteuses est : un plus grand espacement de sous-porteuses parmi les espacements de sous-porteuses correspondant à la pluralité de cellules, ou un plus petit espacement de sous-porteuses parmi les espacements de sous-porteuses correspondant à la pluralité de cellules.

7. Procédé selon la revendication 6, dans lequel la deuxième unité de temps est une unité de temps dans une seconde cellule ; et
la seconde cellule est une cellule correspondant à une troisième unité de temps de référence parmi les M unités de temps de référence dans la correspondance biunivoque, la deuxième unité de temps est une unité de temps qui se trouve dans la seconde cellule et qui chevauche la troisième unité de temps de référence dans le domaine temporel, et la troisième unité de temps de référence est une unité de temps de référence disponible en premier dans le domaine temporel parmi au moins une unité de temps de référence disponible ; et chacune de l'au moins une unité de temps de référence disponible est après la deuxième unité de temps de référence, une cellule correspondant à chaque unité de temps de référence disponible dans la correspondance biunivoque est une cellule candidate disponible, une ressource PUCCH candidate dans une troisième unité de temps dans la cellule candidate disponible ne chevauche pas un symbole de liaison descendante ou un symbole flexible, et la troisième unité de temps est une unité de temps qui se trouve dans la cellule candidate disponible et qui chevauche l'unité de temps de référence correspondant à la cellule candidate disponible dans la correspondance biunivoque ; ou
la seconde cellule est une cellule primaire, PCell, ou la première cellule, la deuxième unité de temps est une unité de temps disponible en premier dans le domaine temporel parmi au moins une unité de temps disponible dans la seconde cellule, et une ressource PUCCH candidate dans chacune de l'au moins une unité de temps disponible ne chevauche pas un symbole de liaison descendante ou un symbole flexible, dans lequel la ressource PUCCH candidate est configurée pour transporter les informations de rétroaction HARQ.

8. Procédé selon l'une quelconque des revendications 6 ou 7,
dans lequel
K1 est indiqué par des informations de commande de liaison descendante, DCI, pour la planification du PDSCH, et K1 est une valeur dans un ensemble K1.

9. Procédé selon la revendication 10, dans lequel
l'ensemble K1 est un ensemble K1 configuré pour une cellule dans laquelle est situé le PDSCH ;
l'ensemble K1 est un ensemble K1 configuré pour une porteuse de la cellule primaire accessible par le dispositif terminal dans la pluralité de cellules ;
l'ensemble K1 est un ensemble K1 configuré pour une porteuse avec un plus petit espacement de sous-porteuses dans la pluralité de cellules ; ou
l'ensemble K1 est un ensemble K1 configuré pour une porteuse avec un plus grand espacement de sous-porteuses dans la pluralité de cellules.

10. Procédé selon l'une quelconque des revendications 7 à 9, dans lequel il existe une pluralité d'unités de temps dans la seconde cellule qui chevauchent la troisième unité de temps de référence dans le domaine temporel, la deuxième unité de temps est une unité de temps au niveau d'un emplacement de domaine temporel le plus avancé de la pluralité d'unités de temps dans la seconde cellule qui chevauchent la troisième unité de temps de référence dans le domaine temporel.

11. Appareil de communication (1900), dans lequel l'appareil de communication est configuré pour réaliser le procédé selon l'une quelconque des revendications 1 à 5.

12. Appareil de communication (1900), dans lequel l'appareil de communication est configuré pour réaliser le procédé selon l'une quelconque des revendications 6 à 10.

13. Produit de programme informatique comprenant des instructions, dans lequel lorsque les instructions sont exécutées sur un ordinateur, l'ordinateur est activé pour réaliser le procédé selon l'une quelconque des revendications 1 à 10.
